# EUROPÄISCHE PATENTSCHRIFT

(11) **EP 3 365 587 B1**
(45) Veröffentlichungstag und Bekanntmachung des Hinweises auf die Patenterteilung: **16.12.2020**
(21) Anmeldenummer: 16782266.7
(22) Anmeldetag: 19.10.2016
(51) Int. Cl.: F16L 37/088, F16L 53/00, F16L 25/01, F16L 37/14, F16L 53/38

(54) **STECKVERBINDER FÜR MEDIENLEITUNGEN**
PLUG-TYPE CONNECTOR FOR MEDIA LINES
CONNECTEUR ENFICHABLE POUR CONDUITES

(30) Priorität: 21.10.2015 DE 102015117966; 17.05.2016 DE 102016109051
(43) Veröffentlichungstag der Anmeldung: 29.08.2018
(73) Patentinhaber: Voss Automotive GmbH, 51688 Wipperfürth (DE)
(72) Erfinder: HESS, Jochem-Andreas, 51688 Wipperfürth (DE); HEINRICHS, Eugen, 51702 Bergneustadt (DE); OBERDÖRFER, Alexander, 42477 Radevormwald (DE); ROSENFELDT, Sascha, 51688 Wipperfürth (DE); RÖHRIG, Lukas, 51709 Marienheide (DE)
(74) Vertreter: Patent- und Rechtsanwälte Dr. Solf & Zapf
(86) Internationale Anmeldenummer: PCT/EP2016/075016
(87) Internationale Veröffentlichungsnummer: WO 2017/067950

(56) Entgegenhaltungen:
- EP-A1- 1 158 236
- EP-A1- 2 541 118
- EP-A1- 2 722 574
- EP-A1- 2 799 750
- WO-A1-2015/064289
- WO-A1-2015/084782
- DE-T5-112008 000 308
- JP-A- 2007 255 668
- JP-A- 2014 209 009

## Beschreibung

Die Erfindung betrifft einen Steckverbinder für Schlauch- und/oder Rohrverbindungen, umfassend
- ein Kupplungsteil mit einer Aufnahmeöffnung, in die ein Steckerteil mit einem einen Bund aufweisenden Steckerschaft in einer Einsteckrichtung einsteckbar ist, und
- eine radial geschlitzte, zumindest bereichsweise federelastische, mindestens zwei federelastische Rastarme aufweisende Halteklammer, die am Kupplungsteil durch radiales Verrasten der Rastarme mit dem Kupplungsteil vormontierbar ist und in einer Vormontage-Stellung eine Einführposition für das Steckerteil einnimmt, in der das Steckerteil durch die Halteklammer in die Aufnahmeöffnung einführbar ist, und wobei die Halteklammer in einer Montage-Stellung eine Halteposition für das eingesteckte Steckerteil einnimmt, in der das Steckerteil mit seinem Bund in der Aufnahmeöffnung mittels der Halteklammer formschlüssig gegen ein Herausziehen blockierbar ist.

Ein derartiger Steckverbinder ist zum Beispiel aus der DE 24 44 993 A1 oder der WO2015/084782 A1 bekannt.

Dabei ist die Halteklammer als ein federelastischer Ring ausgebildet. Der Ring ist durch einen radialen Schlitz unterbrochen, so dass zwei Federarme gebildet sind.

Die Federarme erstrecken sich in einem äußeren Kreisbogen, der über einen Kreiswinkel verläuft, der größer ist als 180°. Der Ring wird in eine schlitzförmige Umfangsöffnung am Kupplungsteil radial eingerastet. Dabei dienen Umfangsnuten am Außenumfang und am Innenumfang des Kupplungsteils zur axialen Befestigung des Ringes in dem Kupplungsteil. Die Federarme umgreifen dabei den Außenumfang des Kupplungsteils, wobei die Umfangswandung des Kupplungsteils zwischen dem Ring im Innern des Kupplungsteils und den Federarmen am Außenumfang des Kupplungsteils umschlossen ist. Am freien Ende der Federarme sind jeweils Betätigungshebel angebracht, mittels derer der Ring über die Federarme in radialer Richtung ausgeweitet und in eine Einführposition bewegt werden kann. Die federelastische Kraft des Ringes hält den Ring in der Halteposition. Ein Nachteil dieser Erfindung ist insbesondere, dass der Ring in seiner Halteposition nicht verriegelt werden kann. Der Ring kann relativ einfach durch Betätigung der Betätigungselemente geöffnet werden. Dies begünstigt ein irrtümliches Lösen der Steckverbindung. Zudem kann mit diesem System nicht sichergestellt werden, ob das Steckerteil vollständig, d. h. gegen ein Herausziehen sicher, in dem Steckverbinder eingesteckt und korrekt blockiert ist. Die Halteklammer kann auch in die Halteposition bewegt werden, wenn das Steckerteil nur teilweise oder gar nicht eingesteckt ist und somit nicht korrekt durch die Halteklammer in dem Steckverbinder festgehalten wird.

Des Weiteren sind gerade und gewinkelte gattungsgemäße Steckverbinder bekannt, die sich unter dem Namen "VOSS Stecksystem 241" auf dem Markt befinden. Nach einem Einstecken der Halteklammer in das Kupplungsteil wird die Verbindung zunächst durch ein Zusammenstecken des Kupplungsteils und des Steckerteiles, insbesondere eines nach der Norm SAE J 2044 ausgebildeten Male-Steckers, hergestellt. Dabei greift die Halteklammer hinter den in der SAE-Steckerkontur ausgebildeten Bund. Durch Zurückziehen des Steckerteiles wird dann die Bildung der Steckverbindung abgeschlossen. Das genannte Stecksystem findet Anwendung im Automobilbau, und zwar insbesondere in Kraftstoffsystemen sowie in beheizten und unbeheizten SCR-Systemen. SCR steht dabei für "Selective catalytic reduction" und bezeichnet eine Technik zur Reduktion von Stickoxiden in Abgasen. In der Fahrzeugtechnik wird das SCR-Verfahren seit seiner Einführung im Jahr 2004 angewendet, um bei Dieselfahrzeugen die Stickoxidemissionen zu senken. Mit Hilfe dieser Technik können Nutzfahrzeuge die Euro-5-Norm und PKW die sehr strenge amerikanische BIN5-Norm sowie die Euro-6-Norm erfüllen. In den Leitungen von SCR-Systemen wird in der Regel eine 32,5-prozentige, wässrige Harnstofflösung geführt, die in der Industrie einheitlich mit AdBlue bezeichnet wird. Die Zusammensetzung ist in der DIN 70070 bzw. ISO 22241-1 geregelt. Diese wässrige Lösung wird vor dem SCR-Katalysator in den Abgasstrang, z. B. mittels Dosierpumpe oder Injektor, eingespritzt.

Die Steckverbinder dieses bekannten Systems erscheinen unter den gleichen oder ähnlichen Gesichtspunkten verbesserungswürdig wie der Steckverbinder gemäß der DE 24 44 993 A1, d. h. die Halteklammer kann auch in die Halteposition bewegt werden, wenn das Steckerteil nur teilweise oder gar nicht eingesteckt ist und somit nicht korrekt durch die Halteklammer in dem Steckverbinder festgehalten wird. Auch kann es unter Umständen zu einem Verklemmen oder Verkanten der Halteklammer im Kupplungsteil kommen, wenn dieses eingesteckt wird.

Um dem abzuhelfen, ist in der deutschen Patentanmeldung 10 2015 104 889 schon vorgeschlagen worden, an dem Kupplungsteil ein separates Verriegelungselement anzuordnen, das von einer Freigabestellung in eine Verriegelungsstellung quer zur Einführrichtung des Steckerteils in Richtung der Mittelachse des Steckverbinders bewegbar ist und in der Freigabestellung eine Bewegung der Halteklammer von der Halteposition in die Einführposition freigibt und in der Verriegelungsstellung die Halteklammer in der Halteposition gegen eine Bewegung in die Einführposition verriegelt. Hierbei wird die erhöhte Montagesicherheit durch eine Vergrößerung der Anzahl der Bauteile erkauft, was nicht uneingeschränkt als vorteilhaft zu betrachten ist.

Der Erfindung liegt die Aufgabe zugrunde, in wenig aufwändiger Weise einen Steckverbinder der eingangs genannten Art zur Verfügung zu stellen, bei dem sowohl der Vormontage-Vorgang der Halteklammer als auch der Montage- und DemontageVorgang des Steckerteils verbessert wird. Dabei soll insbesondere auch die Halteklammer gegen ein Verlieren gesichert werden können.

Die Aufgabe wird erfindungsgemäß durch die Merkmale des kennzeichnenden Teils des Anspruchs 1 gelöst. Demnach ist vorgesehen, dass die Halteklammer von der Grundgestalt her - in Richtung der Längsachse gesehen - U-förmig ausgebildet ist, wobei die Schenkel des U zwei Paare von einander diametral gegenüber liegenden Rastarmen ausbilden, die in axialer Richtung hintereinander angeordnet, jeweils durch einen Schlitz voneinander getrennt und in radialer sowie axialer Richtung federelastisch sind, wobei das erste Paar von Rastarmen das Steckerteil in der Halteposition formschlüssig gegen ein Herausziehen blockiert und das zweite Paar von Rastarmen die Halteklammer sowohl in der Vormontage-Stellung als auch in der Montage-Stellung verliersicher im Kupplungsteil hält.

Dadurch, dass die in axialer Richtung hintereinander angeordneten, jeweils durch einen Schlitz voneinander getrennten Rastarme in axialer Richtung federelastisch sind, können sie zur Vormontage der Halteklammer im Kupplungsteil in einfacher Weise zusammengedrückt werden, wenn die Halteklammer in das Kupplungsteil eingeführt wird. Dadurch wird ein Verkanten und/oder Verklemmen der Halteklammer im Kupplungsteil vermieden.

Da erfindungsgemäß die Rastarme federn bzw. die Federarme rasten, werden anmeldungsgemäß die Begriffe "Rastarm" und "Federarm" synonym benutzt.

Die gesamte Halteklammer kann dabei in fertigungstechnisch einfacher Ausführung einstückig, insbesondere mit Vorteil als ein aus Kunststoff bestehendes Spritzguss-Formteil, ausgebildet sein, wobei sie ähnlich wie der aus dem Stand der Technik bekannte Ring ausgebildet sein kann, indem sie aber von der Grundgestalt her - in Richtung der Längsachse gesehen - insbesondere U-förmig ausgebildet ist. Dabei bilden außerdem die Schenkel des U im Unterschied zum Stand der Technik nicht nur ein Paar, sondern zwei Paare von einander diametral gegenüber liegenden Federarmen, d. h. also insgesamt vier, statt bekanntermaßen zwei Federarme, aus. Die Paare der Federarme sind dabei in axialer Richtung hintereinander angeordnet und die axial hintereinander liegenden Federarme sind jeweils durch einen Schlitz getrennt. Dadurch können die hintereinander liegenden Federarme bei der Vormontage der Halteklammer und auch zur Demontage - wie bereits erwähnt - in axialer Richtung zusammengedrückt werden.

Die hintereinander liegenden Paare von Federarmen erfüllen dabei unterschiedliche Funktionen. Das in axialer Richtung der Einsteckrichtung des Steckerteils zugewandte Paar dient vorwiegend zur Erfüllung der Hauptfunktion der Verbindungsherstellung, also als Rastarme zum radialen Verrasten des Steckerteils, während das in axialer Richtung der Einsteckrichtung des Steckerteils abgewandte Paar zur Erfüllung der erfindungsgemäßen Nebenfunktion der Verriegelung zur Verliersicherung der Halteklammer in ihrer Einführposition und in ihrer Halteposition dient.

Allerdings kann auch das in axialer Richtung der Einsteckrichtung des Steckerteils zugewandte Paar von Federarmen zur Erfüllung der erfindungsgemäßen Nebenfunktionen beitragen, wie nachfolgend noch im Detail beschrieben wird.

Zur Verriegelung der Halteklammer können sich bevorzugt jeweils an den Federarmen des zweiten Paares von Federarmen, das in der Einführposition und in der Halteposition der Halteklammer einer der Einführrichtung des Steckerteils zugewandten Stirnwand des Kupplungsteils abgewandt ist, an den freien Enden der Federarme jeweils Nocken mit nach innen, gegeneinander, gerichteten Spitzen befinden. Beim radialen Einschieben der Halteklammer in das Kupplungsteil zur Vormontage können über vorzugsweise an den Nocken der hinteren Federarme befindliche Schrägflächen diese hinteren Federarme auseinanderdrückt und soweit radial ausgelenkt werden, dass sie beidseitig an einem Blockierelement des Kupplungsteils vorbeigleiten und dieses nach einem radialen Einwärtsfedern dann hintergreifen können. Ein zusätzliches Verriegelungsteil ist dabei nicht notwendig. Das Blockierelement des Kupplungsteils kann zum Zusammenwirken mit den Nocken des zweiten Federarmpaares komplementäre Haltekonturen aufweisen. Diese Haltekonturen bilden zusammen mit den Nocken lösbare Sperrmittel, welche eine Rückbewegung der Halteklammer blockieren, sowohl wenn Vormontage- als auch wenn die Endmontagestellung des erfindungsgemäßen Steckverbinders vorliegt, wenn sich also die Halteklammer in ihrer Halteposition befindet. Die Haltekonturen können mit Vorteil ebenfalls an dem Blockierelement, und zwar beidseitig desselben als Haltevorsprünge ausgebildet sein. Dadurch, dass die Haltevorsprünge durch die Nocken hintergriffen werden, wird eine vorher quer zur und entgegen der Einsteckrichtung des Steckerteils mögliche Bewegung kraft- und formschlüssig unterbunden. Damit ist die Halteklammer verriegelt gehalten, wobei sie in Bezug auf ihre Länge derart dimensioniert ist, dass sie mit dem Außenumfang des Kupplungsteils bündig abschließen kann.

Die Vormontage-Stellung und die Montage-Stellung der Halteklammer können im erfindungsgemäßen Steckverbinder mit Vorteil koinzidieren, d. h., dass die Halteklammer in beiden Stellungen - Vormontage-Stellung und Montage-Stellung - koaxial zur Achse des Kupplungsteiles ausgerichtet ist, wobei die Halteklammer in der Vormontage-Stellung vorzugsweise ein Spiel für eine radiale Bewegung aufweisen kann. Der erfindungsgemäße Steckverbinder kann vorteilhafterweise in dem Vormontage-Zustand, in dem die Halteklammer am Kupplungsteil und in der Aufnahmeöffnung bereits durch radiales Rasten montiert ist, und der die Einführposition für das Steckerteil darstellt, ausgeliefert werden.

Das erste Paar von Rastarmen, welches das Steckerteil in der Halteposition formschlüssig gegen ein Herausziehen blockiert und auf einer der Einsteckrichtung des Steckerteils zugewandten Seite der Halteklammer liegt, wenn sich die Halteklammer in der Einführposition und in der Halteposition im Kupplungsteil befindet, weist erfindungsgemäß auf einer der Einsteckrichtung des Steckerteils zugewandten Seite der Rastarme jeweils Schrägflächen auf, die zum Zusammenwirken mit dem Bund des Steckerteiles entgegen der Einführrichtung des Steckerteiles divergieren. Das Einführen des Steckerteils in die Halteklammer zur Montage wird dadurch erleichtert, da die Schrägflächen als das Steckerteil zentrierende Führungsflächen wirken.

Beim Stecken des Steckerteils trifft der Steckerteil-Bund zunächst auf diese, vorzugsweise aus angefasten Bereichen gebildeten, Schrägflächen der Federarme der Halteklammer, wobei dann durch ein Abgleiten des Bundes auf den Schrägflächen die Halteklammer radial - also die Federarme eines Paares gegeneinander nach außen aufgeweitet wird bzw. werden und das Steckerteil hinter den vorderen Federarmen, welche die Schrägflächen aufweisen, einrasten kann. Die Federarme federn dann wieder radial nach innen und gelangen auf diese Weise in ihre Ausgangsposition.

Die Schrägflächen sind, erfindungsgemäß, jeweils aus
mindestens zwei Teilflächen gebildet, die unterschiedliche Divergenzwinkel entgegen der Einführrichtung des Steckerteiles aufweisen, wobei, erfindungsgemäß, jeweils eine erste
Teilfläche, die sich am freien Ende des jeweiligen Rastarmes befindet,
einen kleineren Divergenzwinkel aufweist als es jeweils der Divergenzwinkel einer zweiten Teilfläche ist, die sich jeweils in einem mittleren Bereich des Rastarmes befindet.
Die Wirkung der Teil-Schrägflächen ist dabei folgende: Die erste Teilfläche zieht die Halteklammer vor ihrem Aufspreizen radial ein, was insbesondere unter dem Gesichtspunkt von Bedeutung ist, dass die Halteklammer in der Vormontage-Stellung vorzugsweise ein Spiel für eine radiale Bewegung aufweisen kann. Hierfür muss die jeweilige erste Teilfläche in Richtung Kupplungsöffnung axial derart der jeweiligen zweiten Teilfläche vorgeordnet sein, dass der Bund des Steckerteiles beim Einführen maßgeblich mit dieser ersten Teilfläche - und noch nicht mit der zweiten Teilfläche - zusammenwirkt. Der Haltebund des Steckerteiles berührt also zuerst die erste Teil-Schrägfläche, und tritt dann bei Vorwärtsbewegung des Steckerteils in Steckrichtung immer mehr in Berührung mit der zweiten Teil-Schrägfläche. Dies kann insbesondere dadurch werden erreicht, dass die erste Teilfläche in einem steileren Winkel zur Mittenachse als die im mittleren Bereich befindliche zweite Teilfläche steht. Die zweite Teilfläche wird auf diese Weise im Anschluss an die erste Teilfläche wirksam und spreizt die Halteklammer radial bis in ihre Öffnungsstellung, so dass der Bund des Steckerteils das erste Rastarm-Paar axial passieren kann. Danach federn die Rastarme radial hinter den Bund des Steckerteils zurück und blockieren dieses gegen ein Herausziehen. Die Teil-Schrägflächen zerlegen also mit Vorteil die integrale Rastarmbewegung in aufeinanderfolgende Einzelbewegungen.

Das Kupplungsteil kann einen, insbesondere als Muffenteil ausgebildeten, Grundkörper und einen, insbesondere von der Grundgestalt her ringförmigen, Aufnahmekörper für die Halteklammer umfassen, die, vorzugsweise über eine stoffschlüssige Verbindung, wie durch eine Laserschweißung, miteinander verbindbar bzw. im Montagezustand miteinander verbunden sind. Wie die Halteklammer kann auch das Kupplungsteil bzw. können seine Teile in fertigungstechnisch einfacher Ausführung als aus Kunststoff bestehende Spritzguss-Formteile ausgebildet sein.

In dem Kupplungsteil, insbesondere in dessen Grundkörper, kann ein Dichtungspaket angeordnet sein, welches vorzugsweise zwei Dichtungsringe, insbesondere elastomere O-Ringe, und dazwischen einen Abstandsring umfasst.

In bevorzugter Ausführung des erfindungsgemäßen Steckverbinders kann vorgesehen sein, dass jeweils an den Feder- bzw. Rastarmen des Paares, das in der Einführposition und in der Halteposition der Halteklammer einer der Einführrichtung des Steckerteils zugewandten Stirnwand des Kupplungsteils zugewandt ist, sich, insbesondere in einem mittigen Bereich der Federarme, Führungszapfen zum Eingriff in komplementäre Führungsschlitze des Kupplungsteils befinden.

Die der Einführrichtung des Steckerteils zugewandte Stirnwand wird im Weiteren auch als vordere Stirnwand und das dieser Stirnwand zugewandte Federarm-Paar als vorderes Paar bezeichnet, während die der Einführrichtung des Steckerteils abgewandte Stirnwand des Aufnahmekörpers für die Halteklammer im Weiteren auch als hintere Stirnwand und das dieser Stirnwand zugewandte Federarm-Paar als hinteres Paar bezeichnet wird.

Durch die sich in der Schlitz-Führungskontur des Kupplungsteils, insbesondere in dessen durch den Aufnahmekörper gebildeten Halteklammeraufnahme, befindlichen Führungszapfen der Halteklammer und die Längsführungsstege der Halteklammer, die in den Längsführungsbereich der Halteklammeraufnahme hereinragen, kann die Halteklammer vorteilhafterweise während des Montage-Bewegungsablaufs im erfindungsgemäßen Steckverbinder geführt und gegen ein Verdrehen um die Steckerteil-Steck-Achse gesichert werden.

Die vorstehend beschriebene Anordnung, wonach die Schrägflächen jeweils aus mindestens zwei Teilflächen gebildet sind, die unterschiedliche Divergenzwinkel entgegen der Einführrichtung des Steckerteiles aufweisen, kann dabei insbesondere bewirken, dass die Führungszapfen der Rastarme optimal in den komplementären inneren Führungskontur der Schlitze des Kupplungsteils entlang laufen. Kollisionen der Führungsnocken, insbesondere mit der Führungskontur, werden dadurch ausgeschlossen, so dass die durch die unterschiedlichen Teil-Schrägflächen bewirkte, zunächst radial einziehende Bewegung und dann nachgelagerte Spreizung der Halteklammer, auch den integralen Steckkraftverlauf bei der Montage begünstigt.

In dem eingangs genannten System werden insbesondere an die beheizbaren Fluidleitungen hohe, sich aus den Beanspruchungsbedingungen ergebende Anforderungen gestellt. Diese Anforderungen betreffen insbesondere das mögliche Auftreten hoher Temperaturen, die an bestimmten Stellen des Systems bzw. der Leitungen z. B. im Bereich von 140 °C bis 180 °C, kurzzeitig sogar im Bereich bis zu 200 °C, liegen können. Des Weiteren ist mit dem Auftreten hoher absoluter Drücke zu rechnen, die standardmäßig im Bereich von 5 bar bis 10 bar, teilweise auch im Bereich bis zu 15 bar, liegen. Es können Druckpulsationen auftreten, die kompensiert werden müssen, sowie auch Volumenänderungen, die beispielsweise mit dem Gefrieren bei Frost und dem Wiederauftauen des Fluids verbunden sind. Hier spricht man im Hinblick auf die Beanspruchungsgröße von einer sogenannten Eisdruckfestigkeit der Leitung. Ein erfindungsgemäßer Steckverbinder ist diesen Anforderungen gewachsen.

Der Grundkörper des Kupplungsteils kann dabei, um eine Beheizung zu ermöglichen, vorzugsweise als Verbinderstück ausgebildet sein, das einen Anschlussabschnitt zur Anschlussverbindung mit einer Fluidleitung aufweist und das einen Heizabschnitt aufweist, in dem elektrische Heizmittel in einer das Kupplungsteil zumindest teilweise umschließenden Anordnung vorgesehen werden können. Die elektrischen Heizmittel, insbesondere Heizleiter, können dabei außen auf das Kupplungsteil aufgebracht werden, wozu auf dem Außenumfang des Kupplungsteils Führungselemente, insbesondere wendelförmige Führungselemente angeordnet bzw. ausgebildet sein können.

In bevorzugter Ausführung kann das Kupplungsteil, insbesondere durch seinen Aufnahmekörper für die Halteklammer, ein von der Grundgestalt her hohlzylindrisches, an den jeweiligen Stirnwänden des Hohlzylinders jeweils geschlossenes Gehäuse für die Halteklammer bilden, welches auf zwei einander diametral gegenüber liegenden Seiten umfangsgemäße Öffnungen zur Durchführung der Halteklammer aufweist. Die Halteklammer ist dadurch vorteilhafterweise im Montagezustand von dem Gehäuse sowohl in axialer, als auch in radialer Richtung zumindest bereichsweise umfasst und damit gegen äußere Einwirkungen geschützt sowie vorteilhafterweise auch gegen die Möglichkeit einer Spontanöffnung gesichert. Die umfangsgemäßen Öffnungen im Kupplungsteil gewährleisten jedoch die Montage- und Demontagemöglichkeit der Halteklammer, indem sie eine geführte radiale Verschieblichkeit der Halteklammer zulassen bzw. ermöglichen. Die Öffnung, auf der Seite, auf der die Halteklammer eingeführt werden kann, wird im Weiteren als Einführöffnung und die Öffnung auf der anderen Seite als Austrittsöffnung bezeichnet, ungeachtet dessen, dass durch diese Öffnung die Halteklammer nicht vollständig heraustritt. Sie ist jedoch auf dieser Seite - beispielsweise für einen manuellen Demontagevorgang - frei zugänglich.

Ebenfalls bevorzugt ist es, wenn sich jeweils an den Federarmen, die in der Einführposition und in der Halteposition der Halteklammer der der Einführrichtung des Steckerteils zugewandten Stirnwand des Kupplungsteils zugewandt sind, sekantenartig gerichtete Längsführungsstege oder Längsführungsstufen zum Zusammenwirken, insbesondere zum Eingriff oder zur Anlage in oder an komplementären Führungen des Kupplungsteils, befinden. Dementsprechend sind an dem Kupplungsteil, insbesondere innenseitig an seiner der Einführrichtung des Steckerteils zugewandten, vorderen Stirnwand, Führungen für diese an den Federarmen der Halteklammer befindlichen Führungsstege oder -stufen vorgesehen. Die Längsführungsstege oder Längsführungsstufen der Federarme können sich insbesondere beidseitig eines Verbindungsbereiches oder in einem Verbindungsbereich, in dem die Federarme miteinander verbunden sind, befinden oder alternativ an radial nach innen gerichteten Vorsprüngen der Federarme angeordnet sein.

In weiteren vorteilhaften Ausbildungen eines erfindungsgemäßen Steckverbinders kann eine Druckverriegelung vorgesehen sein, die verhindert, dass der erfindungsgemäße Steckverbinder - wenn das Steckerteil gesteckt ist - und es unter Druck steht, geöffnet werden kann bzw. dass unterbunden werden kann, dass - durch wie auch immer geartete, der oben erwähnten Betriebsbelastungen - das Steckerteil aus seiner Halteposition gewunden wird.

Weitere vorteilhafte Ausgestaltungen der Erfindung ergeben sich aus der folgenden Figurenbeschreibung und den abhängigen Unteransprüchen.

Es zeigen:
- Fig. 1: eine dreidimensionale Explosionsdarstellung einer Ausführungsform eines erfindungsgemäßen Steckverbinders,
- Fig. 2: eine dreidimensionale Darstellung der in Fig. 1 gezeigten Ausführungsform eines erfindungsgemäßen Steckverbinders mit einem einzuführenden Steckerteil,
- Fig. 3: eine dreidimensionale Darstellung einer Ausführung einer Halteklammer für die in Fig. 1 gezeigte Ausführungsform eines erfindungsgemäßen Steckverbinders,
- Fig. 4a und 4b: aus unterschiedlichen Betrachtungswinkeln, zwei dreidimensionale Darstellungen eines Aufnahmekörpers eines Kupplungsteils für eine Halteklammer der in Fig. 1 gezeigten Ausführungsform eines erfindungsgemäßen Steckverbinders,
- Fig. 5a/5b, 6a/6b, 7a/7b, 8a/8b: jeweils in Stirnansicht und in Seitenansicht eine Figurenfolge der Vormontage einer Ausführungsform eines erfindungsgemäßen Steckverbinders,
- Fig. 9: eine Stirnansicht eines erfindungsgemäßen Steckverbinders im Vormontagezustand, der Darstellung in Fig. 8a entsprechend, jedoch vergrößert und um 180 ° gedreht,
- Fig. 10a: eine Stirnansicht eines erfindungsgemäßen Steckverbinders zu Beginn der Montage,
- Fig. 10b und 10c: zwei Axialschnitte des in Fig. 10a dargestellten erfindungsgemäßen Steckverbinders (ohne Dichtungspaket) zu Beginn der Montage entsprechend den Schnittebenen Xb-Xb und Xc-Xc,
- Fig. 11a, 11b, 11c: im Radialschnitt (Fig. 11a: Ebene XIa-XIa in Fig. 11b), im Axialschnitt (Fig. 11b) und in einer Aufsicht auf die Stirnseite (Fig. 11c), Darstellungen der in Fig. 2, 5a bis 8b sowie 10a bis 10c gezeigten Ausführungsform eines erfindungsgemäßen Steckverbinders im Endmontagezustand mit eingeführtem Steckerteil,
- Fig. 12: eine dreidimensionale Darstellung der in Fig. 11a bis 11c gezeigten Ausführungsform eines erfindungsgemäßen Steckverbinders mit eingeführtem Steckerteil, jedoch noch nicht im Endmontagezustand,
- Fig. 13: in einer Aufsicht auf die Stirnseite, eine weitere Ausführungsform eines erfindungsgemäßen Steckverbinders im Endmontagezustand mit eingeführtem Steckerteil,
- Fig. 14: in einer Darstellung wie in Fig. 3, eine vergrößerte Ansicht einer Hälfte einer Ausführung einer Halteklammer für die in Fig. 1 gezeigte Ausführungsform eines erfindungsgemäßen Steckverbinders,
- Fig. 15a: eine Draufsicht auf die Ausführung einer Halteklammer für die in Fig. 1 gezeigte Ausführungsform eines erfindungsgemäßen Steckverbinders,
- Fig. 15b: einen Schnitt durch die in Fig. 15a dargestellte Ausführungsform einer erfindungsgemäßen Halteklammer entlang der Schnittebene XVb-XVb in Fig. 15a,
- Fig. 15c: einen Schnitt durch die in Fig. 15a dargestellte Ausführungsform einer erfindungsgemäßen Halteklammer entlang der Schnittebene XVc-XVc in Fig. 15a.

In den verschiedenen Figuren der Zeichnung sind gleiche Teile stets mit denselben Bezugszeichen versehen und werden daher in der Regel nachfolgend nur einmal beschrieben. Im Sinne einer besseren Übersichtlichkeit sind jedoch nicht in allen Figuren der Zeichnung sämtliche Teile mit ihren Bezugszeichen bezeichnet.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

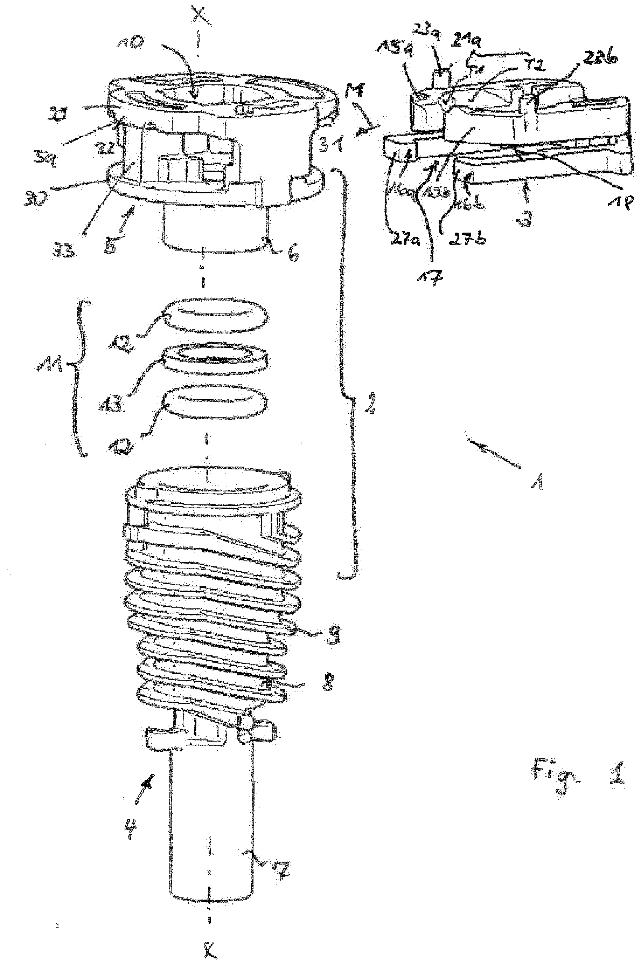

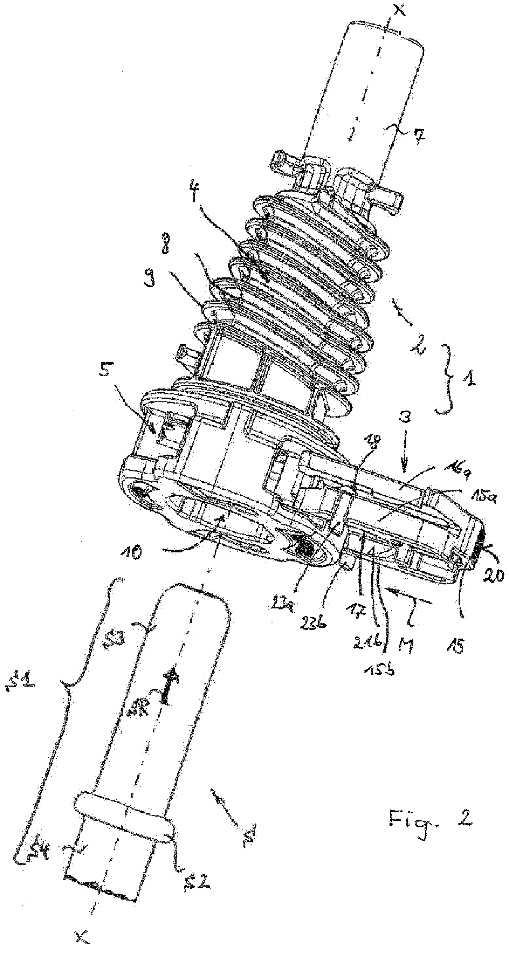

Fig. 1 zeigt eine Explosionsdarstellung einer vorteilhaften Ausführungsform eines erfindungsgemäßen Steckverbinders 1 zum Verbinden eines als Rohrstutzen ausgebildeten Steckerteils S, insbesondere eines SAE J 2044 Male-Steckers. Ein derartiger Stecker S ist - zusammen mit dem erfindungsgemäßen Steckverbinder 1 - zunächst in Fig. 2 gezeigt.

Der Steckverbinder 1 umfasst ein Kupplungsteil 2 und eine zumindest bereichsweise federelastische Halteklammer 3.

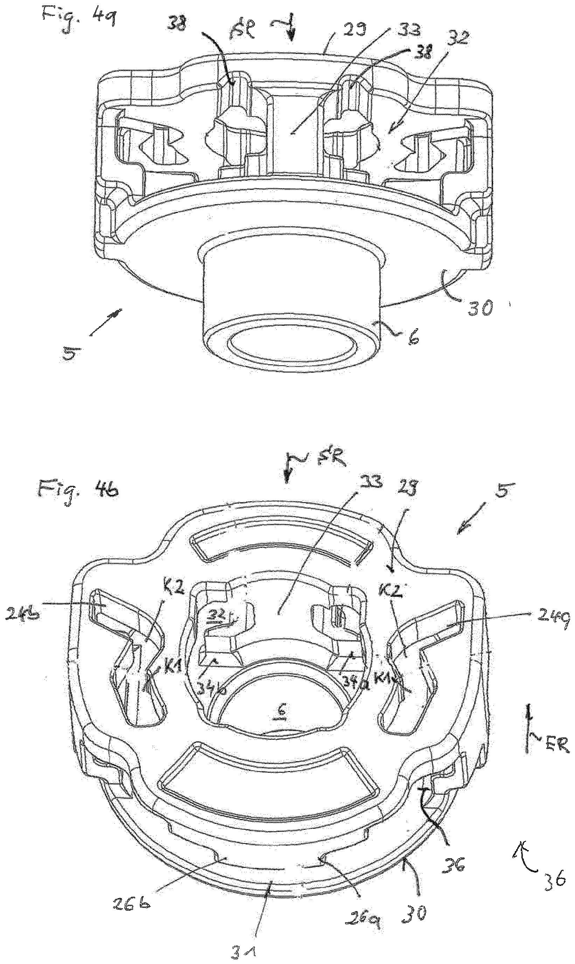

Das Kupplungsteil 2 hat einen, insbesondere als Muffenteil ausgebildeten, Grundkörper 4 und einen, insbesondere von der Grundgestalt her ringförmigen, Aufnahmekörper 5 für die Halteklammer 3, die, vorzugsweise über eine stoffschlüssige Verbindung, wie durch eine Laserschweißung, miteinander verbindbar sind. Am Aufnahmekörper 5 ist zu diesem Zweck ein Verbindungsansatz 6 vorgesehen. Der Grundkörper 4 und/oder der Aufnahmekörper 5 können mit Vorteil als aus Kunststoff bestehende Spritzguss-Formteile ausgeführt sein. Der Aufnahmekörper 5 ist in Fig. 4a und 4b aus unterschiedlichen Betrachtungswinkeln in jeweils dreidimensionaler Darstellung als Einzelteil gezeigt.

Das Kupplungsteil 2 kann einseitig insbesondere mit einer nicht dargestellten Fluidleitung verbunden werden. Zu diesem Zweck ist am Grundkörper 4 ein Anschlussabschnitt 7 ausgebildet. Eine anzuschließende Medienleitung kann insbesondere als Schlauch oder Rohr ausgebildet sein.

Der Grundkörper 4 des Kupplungsteils 2 ist dabei, um eine Beheizung zu ermöglichen, als Verbinderstück ausgebildet, das den Anschlussabschnitt 7 zur Anschlussverbindung der Fluidleitung und einen Heizabschnitt 8 aufweist, in dem - nicht dargestellte - elektrische Heizmittel in einer das Kupplungsteil 2 zumindest teilweise umschließenden Anordnung vorgesehen werden können. Die elektrischen Heizmittel, insbesondere Heizleiter, können dabei außen auf das Kupplungsteil 2 aufgebracht werden, wozu auf dem Mantel im Bereich des Heizabschnitts 8 des Kupplungsteils 2 Führungselemente 9, insbesondere wendelförmige Führungselemente 9 angeordnet bzw. ausgebildet sind.

Auf der dem Anschlussabschnitt 7 für die Medienleitung gegenüberliegenden Seite weist das Kupplungsteil 2 eine Aufnahmeöffnung 10 zum Einstecken des Steckerteils S auf.

Zur Abdichtung der Steckverbindung ist in dem Kupplungsteil 2, und zwar in dessen Grundkörper 4, ein Dichtungspaket 11 angeordnet. Das Dichtungspaket 11 umfasst vorzugsweise zwei O-Ringe 12 und einen dazwischen liegenden Abstandsring 13.

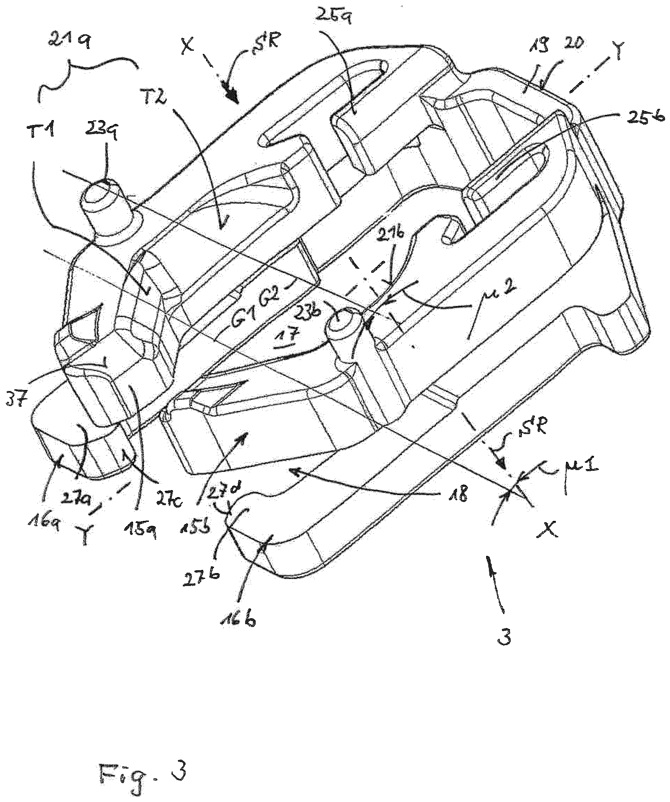

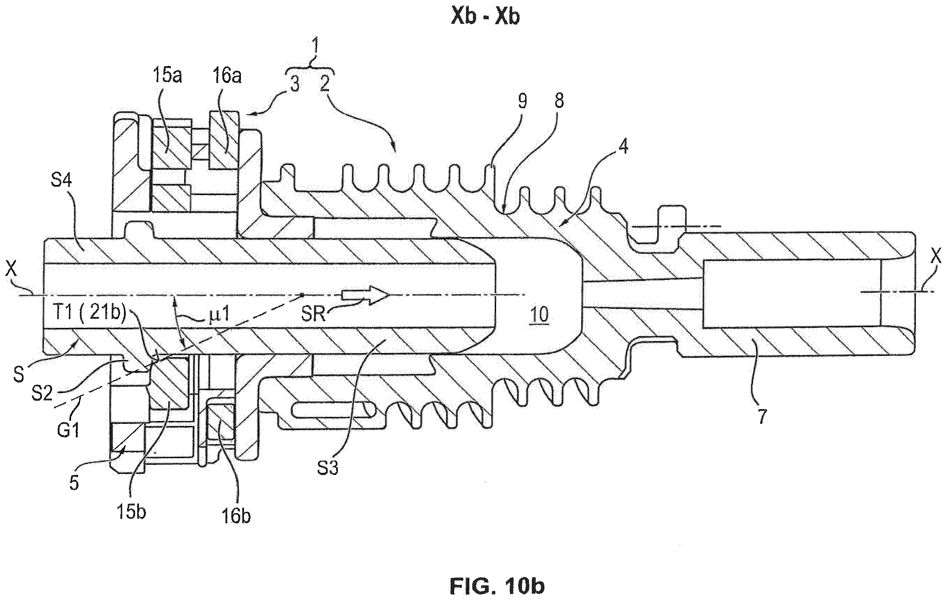

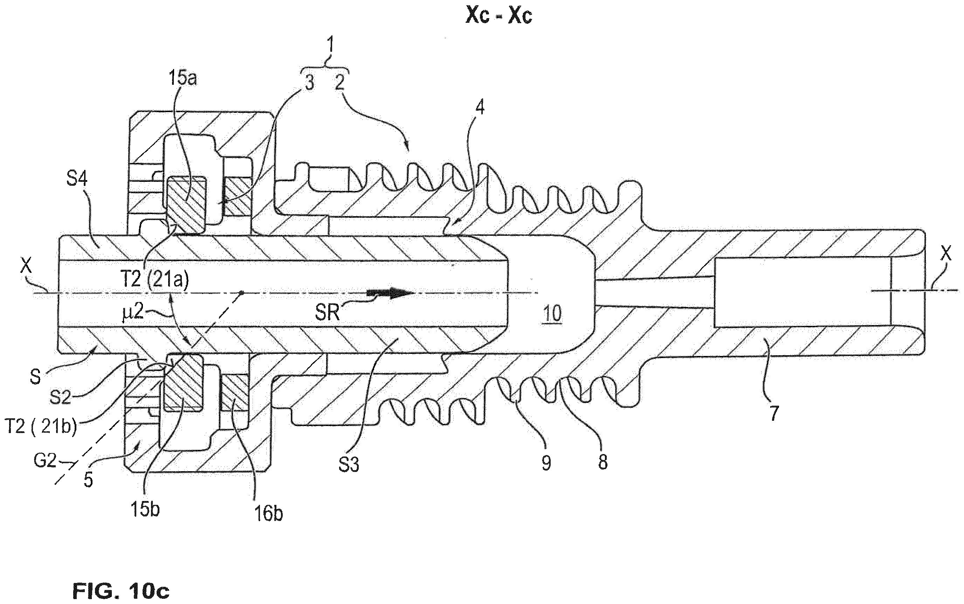

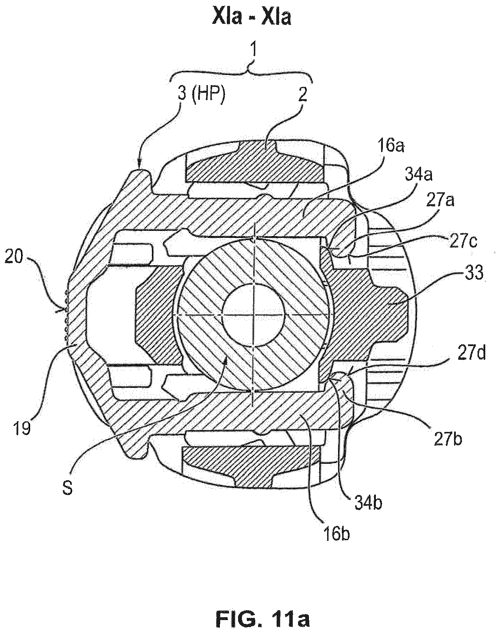

Wie insbesondere Fig. 2 und auch Fig. 10b und 10c sowie Fig. 11a bis 11c zeigen, weist das Steckerteil S einen Einsteckabschnitt S1 auf, an dessen Außenumfang ein umlaufender Bund S2 angeordnet ist. Das Steckerteil S ist hohlzylinderförmig ausgebildet. Der Bund S2 teilt den Einsteckabschnitt S1 in einen Dichtungsabschnitt S3 und einen Verriegelungsabschnitt S4, wobei der Dichtungsabschnitt S3 axial (Längsachse X-X) in Einsteckrichtung SR vor dem Verriegelungsabschnitt S4 angeordnet ist. Auf dem Dichtungsabschnitt S3 sitzt nach dem Stecken des Steckers S das Dichtungspaket 11, wie dies beispielsweise Fig. 3b zeigt.

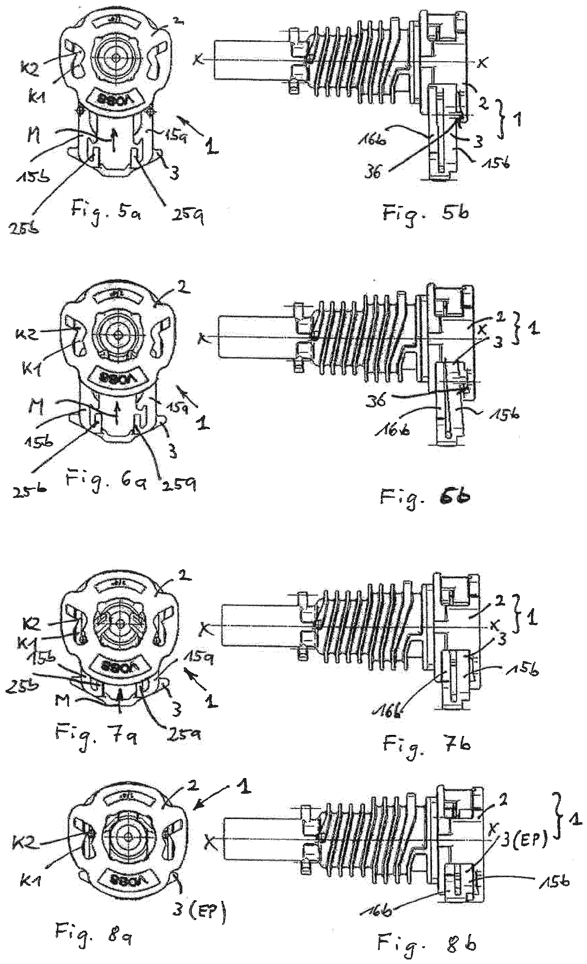

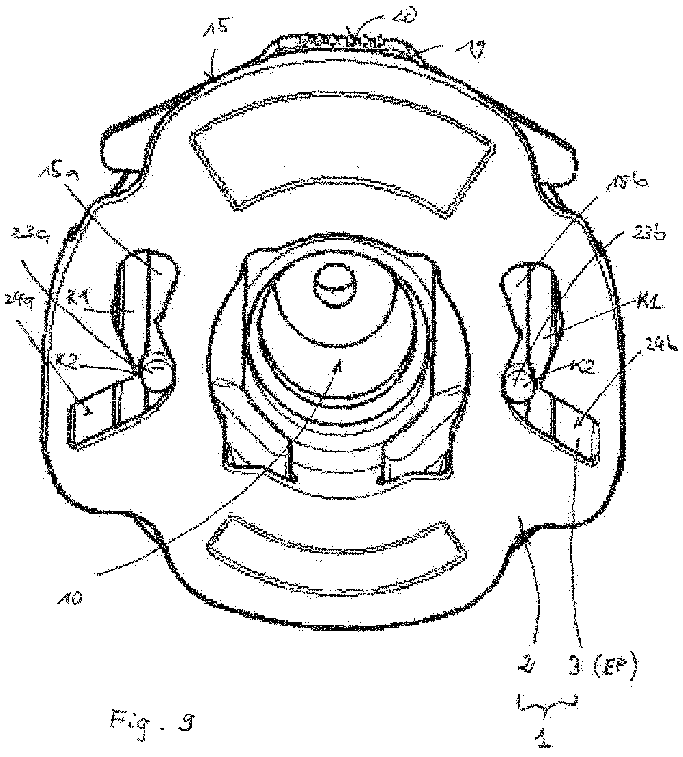

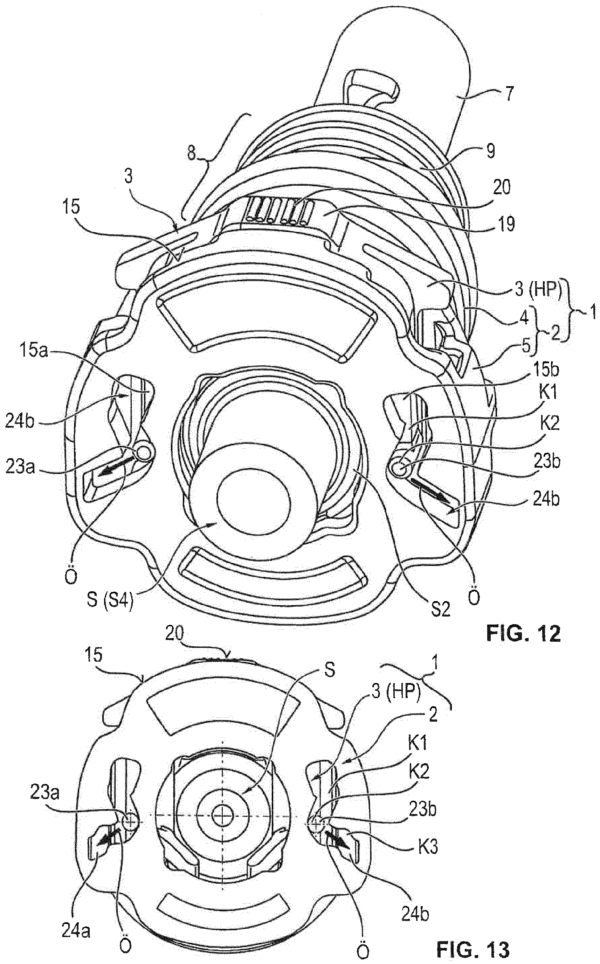

Die Halteklammer 3 ist am Kupplungsteil 2 durch Verrasten vormontierbar und nimmt nach einem Einführen in der Montagerichtung M die in Fig. 8a, 8b und Fig. 9 dargestellte Einführposition EP für das Steckerteil S ein. Sie kann in dieser Vormontage-Stellung vorzugsweise ein Spiel für eine radiale Bewegung aufweisen. Die Halteposition HP der Halteklammer 3 für das Steckerteil S ist in Fig. 11a bis 11c sowie in Fig. 12 und in Fig. 13 (für eine zweite Ausführungsform des erfindungsgemäßen Steckverbinders 1) dargestellt. Wie aus einem Figurenvergleich ersichtlich ist, koinzidieren mit Vorteil die Vormontage-Stellung und die Montage-Stellung der Halteklammer 3 im erfindungsgemäßen Steckverbinder 1, d. h., dass die Halteklammer 3 in beiden Stellungen - Einführposition EP und Halteposition HP für das Steckerteil S - koaxial zur Achse des Kupplungsteiles ausgerichtet ist und sich im Kupplungsteil 2 an der jeweils gleichen Stelle befindet. In der Einführposition EP ist das Steckerteil S durch die Halteklammer 3 in die Aufnahmeöffnung 10 einführbar, und in der Halteposition HP ist das eingesteckte Steckerteil S mit seinem Bund S2 in der Aufnahmeöffnung 10 mittels der Halteklammer 3 formschlüssig gegen ein Herausziehen blockierbar.

Der Innenumfang der Aufnahmeöffnung 10 des Kupplungsteils 2 ist vorteilhafterweise derart ausgebildet, dass in dem vollständig und korrekt eingesteckten Zustand des Steckerteils S in der Aufnahmeöffnung 10 (Fig. 11a bis 11c, Fig. 12, Fig. 13) das Kupplungsteil 2 eine dichtende Verbindung mit dem Steckerteil S bildet. Zur vollständigen Abdichtung dient dabei das Dichtungspaket 11. Die Aufnahmeöffnung 10 ist an ihrem in Einsteckrichtung SR hinteren Ende im Grundkörper 4 durch eine Ringwand 14 begrenzt, die eine Durchgangsöffnung für das Fluid bildet.

Erfindungsgemäß ist vorgesehen, dass die Halteklammer 3 sowohl in der Vormontage-Stellung (Einführposition EP) als auch in der Montage-Stellung (Halteposition HP) verliersicher im Kupplungsteil (2) verriegelt gehalten ist, wobei die Halteklammer 3 mit dem Außenumfang 15 des Kupplungsteils 2 nahezu überstandsfrei bündig abschließt. Wie dabei jeweils die Verriegelung in den beiden Positionen EP, HP erfolgt, wird nachstehend noch im Detail beschrieben.

Zunächst wird anhand der dreidimensionalen Darstellung in Fig. 3 nachfolgend eine bevorzugte Ausführungsform einer Halteklammer 3 für einen erfindungsgemäßen Steckverbinder 1 beschrieben.

Die Halteklammer 3 kann vorzugsweise - wie dargestellt - einstückig, insbesondere als ein aus Kunststoff bestehendes Spritzguss-Formteil, ausgebildet sein.

Die Halteklammer 3 ist dabei insbesondere von der Grundgestalt her - in Richtung der Längsachse X-X des Steckverbinders 1 gesehen - U-förmig ausgebildet, wobei die Schenkel des U zwei Paare 15a/15b, 16a/16b von einander diametral gegenüber liegenden Federarmen 15a, 15b, 16a, 16b ausbilden. Die Federarme 15a, 15b, 16a, 16b bilden federelastische Bereiche der Halteklammer 3. Die Schenkel des U sind dabei durch einen radialen Schlitz 17 getrennt.

Die Paare 15a/15b, 16a/16b der Federarme 15a, 15b, 16a, 16b sind in axialer Richtung X-X hintereinander angeordnet, und ebenfalls voneinander durch einen Schlitz 18, jedoch einen axialen Schlitz 18, getrennt. Die Halteklammer 3 ist dabei hinsichtlich einer durch sie verlaufenden Längsachse Y-Y symmetrisch ausgebildet.

Durch den Verbindungsbereich 19 der Schenkel des U, der einen starren Bereich der zumindest bereichsweise federelastische Halteklammer 3 darstellen kann, ist auf der den freien Enden der Federarme 15a, 15b, 16a, 16b abgewandten Seite eine Betätigungsfläche 20 für die Halteklammer 3 ausgebildet, über die zur Vormontage Fig. 5a/5b bis Fig. 8a/8b) ein manuelles radiales Einschieben (Pfeil M in Fig. 5a, 6a, 7a) der Halteklammer 3 in das Kupplungsteil 2 erfolgen kann.

Das in axialer Richtung X-X der Einsteckrichtung SR des Steckerteils 1 zugewandte, vordere Paar 15a/15b dient vorwiegend zur Erfüllung der Hauptfunktion der Verbindungsherstellung, stellt also die Rastarme 15a, 15b zum radialen Verrasten des Steckerteils 1 bereit, während das in axialer Richtung X-X der Einsteckrichtung SR des Steckerteils S abgewandte, hintere Paar 16a/16b zur Erfüllung der erfindungsgemäßen Nebenfunktion der Verriegelung der Halteklammer 3 in ihrer Einführposition EP und in ihrer Halteposition HP dient. Diese Verriegelung wird insbesondere durch Fig. 11a veranschaulicht. Dadurch wird die Halteklammer 3 sowohl in der Vormontage-Stellung als auch in der Montage-Stellung verliersicher im Kupplungsteil 2 gehalten.

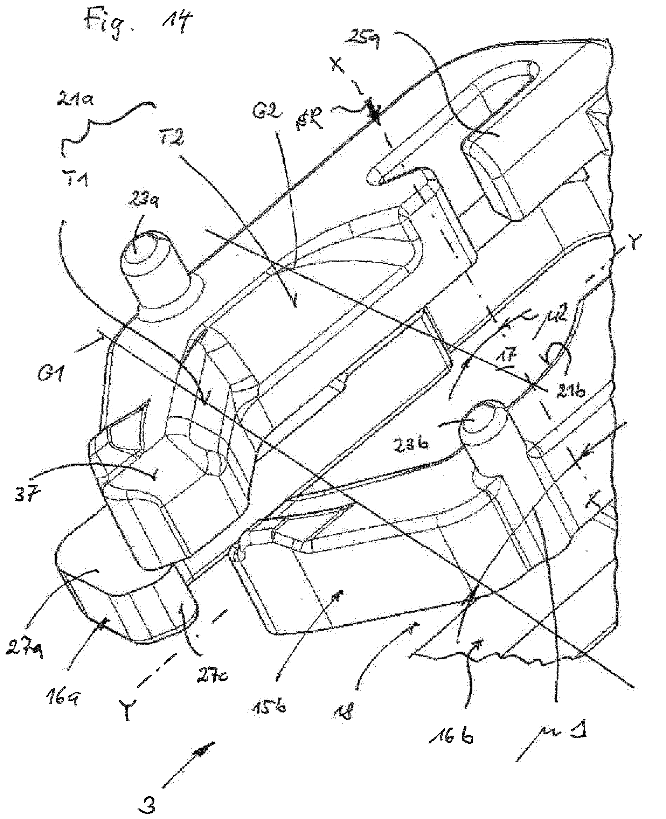

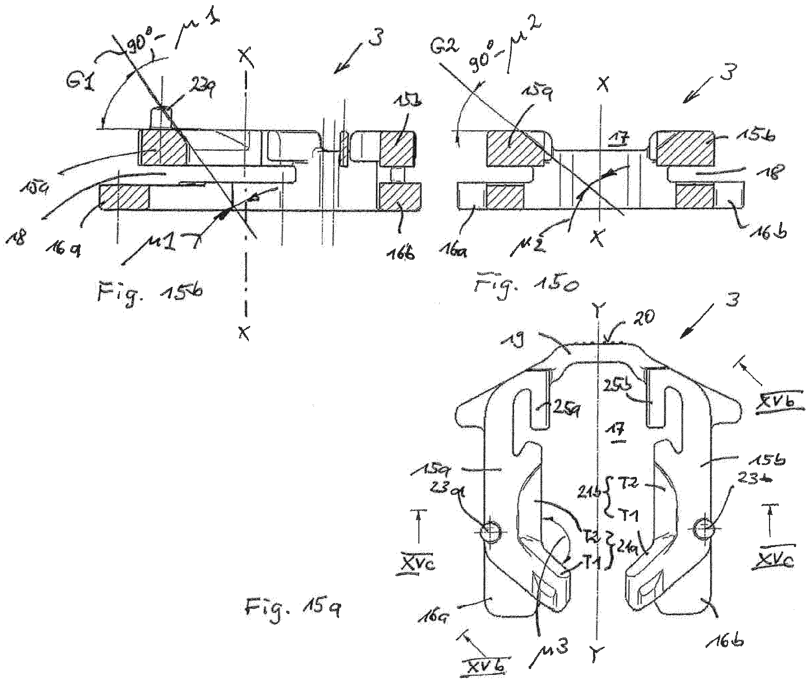

Jeweils an den Federarmen 15a, 15b des vorderen Paares 15a/15b befinden sich, insbesondere zumindest in einem mittigen Bereich der Federarme 15a, 15b, Schrägflächen 21a, 21b, die zum Zusammenwirken mit dem Bund S2 des Steckerteiles S entgegen der Einführrichtung SR des Steckerteiles S divergieren. Die Schrägflächen 21a, 21b sind mit Vorteil jeweils aus mindestens zwei Teilflächen T1, T2 gebildet, die in unterschiedlichen Winkeln µ1, µ2 entgegen der Einführrichtung SR des Steckerteiles S divergieren. Die Schenkel der Winkel µ1, µ2 sind dabei - wie Fig. 3 und auch Fig. 14 in vergrößerter Darstellung sowie die Fig. 15a bis 15c, insbesondere die Schnittdarstellungen in Fig. 15b und 15c, veranschaulichen - einerseits jeweils durch die Längsachse X-X des Steckverbinders 1 und anderseits durch eine durch die jeweilige Flächenmitte, der Neigung der Fläche T1, T2 folgende Gerade G1, G2 gebildet. Diese Ausbildung ist für beide Schrägflächen 21a, 21b identisch, gilt also auch für die Schrägfläche 21b, die in Fig. 3 und Fig. 14 aufgrund der perspektivischen Darstellung nur andeutungsweise zu sehen ist. In Fig. 15b und Fig. 15c sind jeweils auch die Komplementwinkel 90°-µ1 und 90°-µ2 eingezeichnet, welche die Geraden mit der ebenen Klammeroberfläche einschließen. Die Winkel liegen konkret bei 55° für 90°-µ1 und bei 40° für 90°-µ2 bzw. der Winkel µ1 ist gleich 35°, und der Winkel µ2 ist gleich 50°. Sie unterscheiden sich also um 15° voneinander.

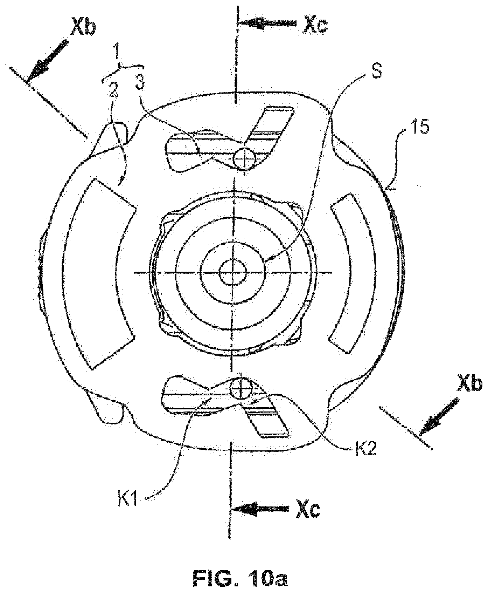

Die Wirkungsweise der Teilflächen T1, T2 wird nachfolgend noch genauer unter Bezugnahme auf Fig. 10a bis 10c erläutert, denen diese Teilflächen T1, T2 ebenfalls zu entnehmen sind.

Des Weiteren ist vorgesehen, dass sich jeweils an den Federarmen 15a, 15b des vorderen Paares 15a/15b von Federarmen 15a, 15b, insbesondere in einem mittigen Bereich der Federarme 15a, 15b, Führungszapfen 23a, 23b zum Eingriff in komplementäre Führungsschlitze 24a, 24b des Kupplungsteils 2 befinden.

Außerdem kann insbesondere Fig. 3, sowie 5a, 6a und 7a entnommen werden, dass sich jeweils an den Federarmen 15a, 15b eines vorderen Paares 15a/15b von Federarmen 15a, 15b, insbesondere beidseitig des Verbindungsbereiches 19 oder auch in dem Verbindungsbereich 19, in dem die Federarme 15a, 15b, 16a, 16b miteinander verbunden sind, sekantenartig zum Kupplungsteil gerichtete Längsführungsstege 25a, 25b zum Zusammenwirken mit in Fig. 4b dargestellten komplementären Führungen 26a, 26b des Kupplungsteils 2 befinden.

Aus Fig. 1, 3 und 11a wird des Weiteren deutlich, dass an den Federarmen 16a, 16b des hinteren Paares 16a/16b von Federarmen 16a, 16b, das der Einführrichtung des Steckerteils S abgewandt ist, an den freien Enden jeweils Nocken 27a, 27b mit nach innen, gegeneinander, gerichteten Spitzen ausgebildet sind.

Wie die Einzelteildarstellungen des Aufnahmekörpers 5 des Kupplungsteils 2 in Fig. 4a und 4b exemplarisch veranschaulichen, bildet das Kupplungsteil 2, insbesondere durch seinen Aufnahmekörper 5 für die Halteklammer 2, ein von der Grundgestalt her hohlzylindrisches, an den jeweiligen Stirnwänden 29, 30 des Hohlzylinders jeweils geschlossenes Gehäuse für die Halteklammer 3. Dabei weist es auf zwei einander diametral gegenüber liegenden Seiten umfangsgemäße Öffnungen 31, 32 zum Durchgriff der Halteklammer 3, insbesondere eine Einführöffnung 31 (Fig. 4b) und eine Austrittsöffnung 32 (Fig. 4a), auf.

Die bereits erwähnten Führungsschlitze 24a, 24b sind auch Fig. 4b deutlich zu entnehmen. In dem Kupplungsteil 2, insbesondere in dessen Aufnahmekörper 5 für die Halteklammer 3, befinden sich auf der der Einführrichtung des Steckerteils S zugewandten Stirnwand 29 des Kupplungsteils 2 diese Führungsschlitze 24a, 24b zum Eingriff der an den vorderen Federarmen 15a, 15b der Halteklammer 3 befindlichen komplementären Führungszapfen 23a, 23b. Die Führungsschlitze 24a, 24b sind jeweils Langlöcher mit zwei Knickwinkeln K1, K2. Ihre Form kann auch durch die Form eines stilisierten Blitzes charakterisiert werden.

Dadurch ist in den Führungsschlitzen 24a, 24b jeweils eine Steuerkontur ausgebildet, durch die im Zusammenwirken mit den komplementären Führungszapfen 23a, 23b einerseits eine Einführbewegung und eine Ausschubbewegung der Halteklammer 3 quer zur Steckrichtung SR des Steckerteils S begrenzt wird, und andererseits bei einer Bewegung der Halteklammer 3 quer zur Steckrichtung SR des Steckerteils S eine radiale Auswärtsbewegung oder eine radiale Einwärtsbewegung der Federarme 15a, 15b bewirkt wird, an denen sich die Führungszapfen 23a, 23b befinden.

Auch sind die bereits erwähnten Führungen 26a, 26b, die sich in dem Kupplungsteil 2, insbesondere in dessen Aufnahmekörper 5 für die Halteklammer 3, insbesondere innenseitig an der der Einführrichtung SR des Steckerteiles S zugewandten Stirnwand 29 des Kupplungsteils 2, für die an den Federarmen 15a, 15b der Halteklammer 3 befindlichen komplementären Führungsstegen 25a, 25b oder -stufen befinden, Fig. 6b zu entnehmen.

Des Weiteren zeigen beide Figuren 4a und 4b , dass sich in dem Kupplungsteil 2, insbesondere mittig im Bereich der Austrittsöffnung 32 des Aufnahmekörpers 5 des Kupplungsteils 2, ein Blockierelement 33 mit jeweils einer Gegenkontur 34a, 34b für den Anschlag der an den Federarmen 16a, 16b endseitig angeordneten Nocken 27a, 27b befindet, wobei die Nocken 27a, 27b und die Gegenkonturen 34a, 34b lösbare Sperrmittel für die hinteren Federarmen 16a, 16b der Halteklammer 3 repräsentieren, insofern sie eine kraft- und formschlüssige Verbindung zwischen der Halteklammer 3 und dem Kupplungsteil 2 ausbilden können, wie dies in Fig. 11a gezeigt ist.

Zur Montage des erfindungsgemäßen Steckverbinders 1 wird zunächst gemäß Fig. 1 das Dichtpaket 11 und dann der Aufnahmekörper 5 in den Grundkörper 4 des Kupplungsteils 2 eingesetzt. Dann werden der Grundkörper 4 und der Aufnahmekörper 5 - z. B. durch Laserschweißen - insbesondere stoffschlüssig miteinander verbunden.

Danach wird die Halteklammer 3 gemäß der Figurenfolge 5a/5b bis 8a/8b in das Kupplungsteil 2 eingesetzt, so dass der in Fig. 8a/8b und 9 dargestellte VorMontagezustand EP entsteht. Die Halteklammer 3 wird zunächst quer zur Einsteckrichtung SR des Steckerteiles S durch die Einführungsöffnung 31 geführt, was durch Einführschrägen 36 am Kupplungsteil 2 (Fig. 4b, 5b, 6b) erleichtert werden kann. Zum Einsetzen der Halteklammer 3 werden dann deren Federarmpaare 15a/15b, 16a/16b axial gegeneinander gedrückt, was wiederum durch den Schlitz 18 ermöglicht wird. Dies ist in Fig. 6a/6b dargestellt. Ein Verklemmen oder Verkanten der Halteklammer 3 im Kupplungsteil 2 ist dabei vorteilhafterweise ausgeschlossen.

Danach werden die Federarmpaare 15a/15b, 16a/16b druckentlastet, so dass die Führungszapfen 23a, 23b der vorderen Federarme 15a, 15b zum Eingriff in die komplementären Führungsschlitze 24a, 24b des Kupplungsteils 2 kommen (Fig. 7a/7b). Die Führungszapfen 23a, 23b der Federarme 15a, 15b schlagen dabei in den Führungsschlitzen 24a, 24b endseitig an, so dass eine Rückbewegung der Halteklammer 3 blockiert ist.

Um zur endgültigen Einnahme der Vormontage-Stellung EP zu kommen, muss jedoch noch eine radiale Weiterbewegung der Halteklammer 2 in ihrer Einführrichtung M erfolgen, wobei die Längsführungsstege 25a, 25b stabilisierend wirken. Bei der Weiterbewegung werden die Nocken 27a, 27b der hinteren Federarme 16a, 16b durch an ihnen befindliche, nach innen konvergierende Schrägflächen 27c, 27d (Fig. 3, Fig. 11a) jeweils durch das Zusammenwirken mit den Gegenkonturen 34a, 34b des Blockierelements 33, wenn sie dort anschlagen, auseinander gedrängt, passieren die Gegenkonturen 34a, 34b und hintergreifen diese schließlich, wie in Fig. 11a gezeigt. Fig. 11a bezieht sich zwar auf die Endmontagestellung HP, jedoch ist diese Fixierung in der Endmontage-Stellung HP und in der Vormontage-Stellung EP der Halteklammer identisch. Die Halteklammer 3 befindet sich somit in der Einführposition EP, wobei sie verriegelt gehalten ist. Wie insbesondere Fig. 8a und 9 zu entnehmen ist, befinden sich dabei die Führungszapfen 23a, 23b der Federarme 15a, 15b in den Führungsschlitzen 24a, 24b im Bereich der zweiten Knickwinkel K2. In diesem Zustand kann ein erfindungsgemäßer Steckverbinder 1 ausgeliefert werden.

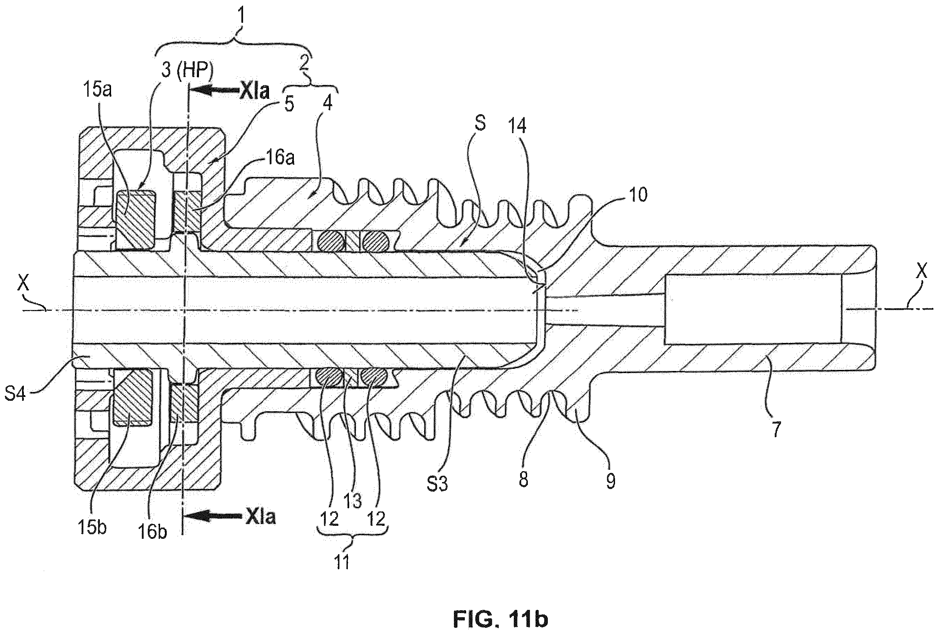

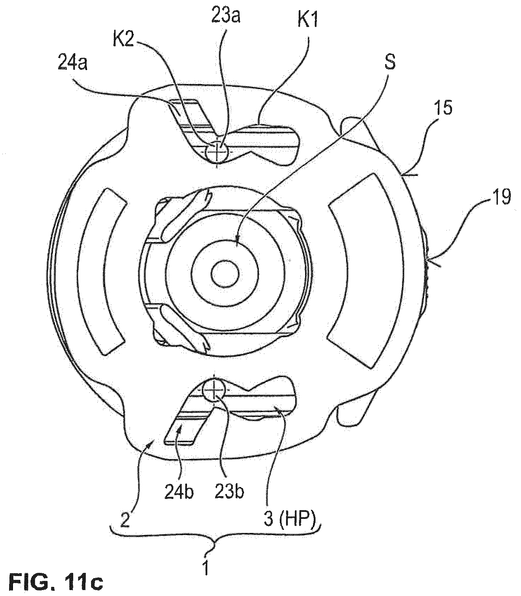

Fig. 10a, 10b und 10c zeigen - wie bereits erwähnt - einen Zwischenzustand zwischen dem Vormontagezustand, insbesondere gemäß Fig. 9, und dem Endmontagezustand, insbesondere gemäß Fig. 11a bis 11c und Fig. 12, eines erfindungsgemäßen Steckverbinders 1. Fig. 10a, 10b und 10c zeigen insbesondere einen Zustand zu Beginn des Steckens, während Fig. 11a, 11b und 11c den Zustand nach Erreichen der Steckposition des Steckerteils 1 zeigen.

Ein Figurenvergleich zwischen Fig. 10b und Fig. 10c, welche die beiden gemäß Fig. 10a unterschiedlichen Axialschnitte des erfindungsgemäßen Steckverbinders 1 entsprechend den Schnittebenen Xb-Xb und Xc-Xc zeigen, veranschaulicht die Wirkungsweise der bereits erwähnten Teil-Schrägflächen T1, T2. Wie Fig. 10b zeigt, berührt der Haltebund S2 des Steckerteiles S beim Einführen in die Halteklammer 3 zuerst die erste Teil-Schrägfläche T1, und tritt dann bei weiterer Vorwärtsbewegung des Steckerteils S in Steckrichtung SR immer mehr in Berührung mit der zweiten Teil-Schrägfläche T2.

Die erste Teilfläche T1, welche der zweiten Teilfläche T2 hinsichtlich ihres Zusammenwirkens mit dem Bund S2 des Steckerteiles S funktionsmäßig vorgeordnet ist, zieht die Halteklammer 3 vor ihrem Aufspreizen radial ein, insofern die Halteklammer 3 noch ein Spiel für eine radiale Bewegung aufweisen kann (Fig. 10b). Die zweite Teilfläche T2 ist dabei noch funktionslos (Fig. 10c). Dies wird dadurch erreicht, dass die erste Teilfläche T1 in einem kleineren Winkel µ1 zur Mittenachse X-X des Steckverbinders 1 steht als die zweite Teilfläche T2. Die zweite Teilfläche T2 steht in einem größeren Winkel µ2 zur Mittenachse X-X. Das radiale Einziehen der Halteklammer durch die erste Teilfläche T1 bewirkt, dass die Führungszapfen 23a, 23b an den inneren Führungsflächen der Führungsschlitze 24a, 24b entlang bewegt werden, und die Halteklammer somit schon leicht gespreizt wird. Im Anschluss an die erste Teilfläche T1 wird bei einem weiteren Einstecken dann die zweite Teilfläche T2 wirksam und spreizt die Halteklammer 3 radial bis in ihre Öffnungsstellung. Die Halteklammer 2 wird durch den Bund S2 aufgeweitet, wobei sich die Federarme 15a, 15b radial auseinander bewegen, so dass der Bund S2 des Steckerteils S das erste Rastarm-Paar 15a/15b in axialer Richtung passieren kann. Danach können die Arme 15a, 15b schließlich hinter dem Bund S2 einrasten. Diese weitere Spreizung der Halteklammer 3 wirkt sich auf die Führungszapfen 23a, 23b derart aus, dass diese insbesondere von der inneren Führungskontur der Führungsschlitze 24a, 24b abheben können und an ihnen entlang bis in eine Endstellung - diese entspricht der maximalen Spreizung der Halteklammer 3 durch den Bund S2 - bewegen. Nach dem Einrasten der Haltearme 15a, 15b hinter dem Bund S2 unterstützt das Zurückgleiten der Führungszapfen 23a, 23b auf der inneren Führungskontur der Führungsschlitze 24a, 24b die radiale Rückstellbewegung der Halteklammer 3 in die Einführposition. Die Führungszapfen 23a, 23b befinden sich dann wiederum in den Führungsschlitzen 24a, 24b in der Position des zweiten Knickwinkels K2.

Bei einer Halteklammer 3 ohne solchermaßen ausgestaltete Teilflächen T1, T2, die insbesondere als Anfasungen gestaltet sein können, würden die Führungsnocken 23a, 23b nur radial nach außen gedrängt, und es könnte unter Umständen zu einer Kollision mit den äußeren Begrenzungen der Führungskontur der Führungsschlitze 24a, 24b im Bereich des zweiten Knickwinkels K2 kommen. Dies würde zu einem unerwünschten plötzlichen Ansteigen der Steckkräfte und bei manuellem Stecken damit beim Monteur zu einem irritierenden Ruck im Steckgefühl führen.

Zum Lösen der Steckverbindung wird die Halteklammer 3 durch Drücken auf ihre Betätigungsfläche 20 weiter in Betätigungsrichtung M verschoben. Während der Betätigung werden dadurch die Führungszapfen 23a, 23b aus dem Knickbereich K2 in der Führungskontur der Führungsschlitze 24a, 24b radial nach außen (Pfeile Ö in Fig. 12 und 13) bis maximal zum Ende des Langlochs verschoben. Damit werden die Federarme 15a, 15b aufgeweitet, so dass durch das Aufweiten der Federarme 15a, 15b der Steckerteil-Bund S2 wieder freigegeben wird. Die Verbindung kann nun gelöst werden, indem das Steckerteil S aus dem Steckverbinder 1 herausgezogen wird.

Wird die Halteklammer 3 nach der Demontage dann losgelassen, so rutscht sie - aufgrund der mit der vorhergehenden Aufweitung sich einstellenden Rückstellkraft - zurück in eine Position, in der sich die Führungszapfen 23a, 23b im Bereich des zweiten Knickwinkels K2 befinden, wobei die Halteklammer 3 aber nicht aus dem Kupplungsteil 2 hervorsteht.

Wie beispielsweise aus Fig. 9, 12 und 13 besonders deutlich wird, verlaufen die Führungsschlitze 24a, 24b des Kupplungsteils 2 aufgrund der beiden Knickpunkte K1, K2 zunächst in einem ersten Abschnitt radial nach außen, dann in einem zweiten Abschnitt radial nach innen und dann in einem dritten Abschnitt schließlich wieder radial nach außen.

Da die Federarme 15a, 15b bei der Vormontage in axialer Richtung zusammengedrückt werden (Fig. 6b) spielen der erste und der zweiten Abschnitt der Führungsschlitze 24a, 24b jedoch bei der Montageweise gemäß den Fig. 5a/5b bis 8a/8b nur eine untergeordnete Rolle, ja es könnte als Durchbruch sogar ganz auf sie verzichtet werden, wobei sie dann alternativ verschlossen wären, aber zweckmäßigerweise in den Abschnitten innenseitig an der Wand 29 Führungsnuten für die Führungszapfen 23a, 23b vorgesehen werden könnten.

Die in Fig. 13 dargestellte weitere Ausführungsform eines erfindungsgemäßen Steckverbinders 1, welche den Endmontagezustand HP mit eingeführtem Steckerteil S zeigt, unterscheidet sich von der ersten Ausführungsform dadurch, dass in den Führungsschlitzen 24a, 24b des Kupplungsteils 2 drei Knickpunkte K1, K2, K3 vorhanden sind. Der dritte Knickpunkt K3 befindet sich dabei in dem jeweiligen die Öffnungsbewegung der Halteklammer 3 steuernden, dritten, radial nach außen führenden Abschnitt der Führungsschlitze 24a, 24b. Der dritte Knickpunkt K3 stellt, da die Führungszapfen 23a, 23b an dieser Stelle auf eine zusätzliche Erhebung in ihrer Bahn treffen, einen Widerstand gegen die Öffnungsbewegung dar und kann vorteilhafterweise derart lokalisiert sein, dass genau dann, wenn die Halteklammer 3 ausreichend für das Herausziehen des Steckerteils S geöffnet ist, ein Kraftanstieg, gegebenenfalls verbunden mit einem Klicken, auftritt. Insbesondere bei kleinen Nenngrößen, bei denen auch die Betätigungsflächen 20 klein sind, wird für den Monteur der Zustand des Lösevorgangs besser erkennbar, da er ein haptisches bzw. zusätzlich auch ein akustisches Signal erhält, und daher nicht versucht, vorzeitig am Steckerteil S oder an einer damit verbundenen Leitung zu ziehen, um die Steckverbindung zu lösen.

Des Weiteren kann der erfindungsgemäße Steckverbinder 1 in vorteilhafter Ausgestaltung zusätzlich eine Druckverriegelung beinhalten, welche insbesondere verhindert, dass das System, also die Steckverbindung im Montagezustand, wenn der Steckerteil S gesteckt ist und es unter Druck steht, geöffnet werden kann. Dadurch kann auch die schädliche Wirkung von in axialer Richtung X-X am Steckerteil S wirkenden Zugkräften ausgeschaltet werden. In bevorzugter Ausbildung wird eine derartige Druckverriegelung dadurch realisiert, dass sich an den vorderen Federarmen 15a, 15b, insbesondere an deren freien Enden, in axialer Richtung X-X entgegen der Steckrichtung SR vorstehende angefaste Erhebungen 37 (nur in Fig. 3 dargestellt) befinden, denen komplementär jeweils eine Gegenkontur 38 im Aufnahmekörper 5 der Halteklammer 2 entspricht (nur in Fig. 4a dargestellt). Bei den Gegenkonturen 38 handelt es sich dabei um Vertiefungen, in die die Erhebungen 37 formschlüssig eingreifen.

Die Erfindung ist nicht auf die dargestellten und beschriebenen Ausführungsbeispiele beschränkt, sondern umfasst auch alle im Sinne der Erfindung gleichwirkenden Ausführungen. So sind in den dargestellten Ausführungsbeispielen die Teilflächen T1, T2 der Schrägflächen 21a, 21b jeweils ebene Flächen, sie könnten jedoch jeweils auch als Kegelstumpf-Mantelflächen oder als Freiformflächen gestaltet sein. Sie stehen in der in Fig. 15a gezeigten Darstellung insbesondere in einem Winkel µ3 zueinander, der vorzugsweise 135° ± 15° betragen kann.

Die Differenz µ2-µ1 zwischen den Winkeln µ2, µ1 kann in allgemeiner Ausführung vorzugsweise im Bereich von 10° bis 20° liegen. Die Winkel µ2, µ1 selbst können allgemein vorzugsweise Werte im Bereich von 35°±5° für den Winkel µ1 und Werte im Bereich von 50°±10°, insbesondere 50°±7°, für den Winkel µ2 annehmen.

## Patentansprüche

1. Steckverbinder (1) für Schlauch- und/oder Rohrverbindungen, umfassend
- ein Kupplungsteil (2) mit einer Aufnahmeöffnung (10), in die ein Steckerteil (S) mit einem einen Bund (S2) aufweisenden Steckerschaft (S1) in einer Einsteckrichtung (SR) einsteckbar ist, und
- eine radial geschlitzte (17), zumindest bereichsweise federelastische mindestens zwei Rastarme (15a, 15b) aufweisende Halteklammer (3), die am Kupplungsteil (2) vormontierbar ist und in einer Vormontage-Stellung eine Einführposition (EP) für das Steckerteil (S) einnimmt, in der das Steckerteil (S) durch die Halteklammer (3) in die Aufnahmeöffnung (10) einführbar ist, und wobei die Halteklammer (3) in einer Montage-Stellung eine Halteposition (HP) für das eingesteckte Steckerteil (S) einnimmt, in der das Steckerteil (S) mit seinem Bund (S2) in der Aufnahmeöffnung (10) mittels der Halteklammer (3) formschlüssig gegen ein Herausziehen blockierbar ist,
wobei die Halteklammer (3) von der Grundgestalt her - in Richtung der Längsachse (X-X) gesehen - U-förmig ausgebildet ist, wobei die Schenkel des U zwei Paare (15a/15b, 16a/16b) von einander diametral gegenüber liegenden Rastarmen (15a, 15b, 16a, 16b) ausbilden, die in axialer Richtung (X-X) hintereinander angeordnet, jeweils durch einen Schlitz (18) voneinander getrennt und in radialer sowie axialer (X-X) Richtung federelastisch sind, wobei das erste Paar (15a/15b) von Rastarmen (15a, 15b) das Steckerteil (S) in der Halteposition (HP) formschlüssig gegen ein Herausziehen blockiert und das zweite Paar (16a/16b) von Rastarmen (16a, 16b) die Halteklammer (3) sowohl in der Vormontage-Stellung als auch in der Montage-Stellung verliersicher im Kupplungsteil (2) hält,
**dadurch gekennzeichnet, dass** das erste Paar (15a/15b) von Rastarmen (15a, 15b) auf einer der Einsteckrichtung (SR) des Steckerteils (S) zugewandten Seite der Halteklammer (3) liegt, wenn sich die Halteklammer (3) in der Einführposition (EP) und in der Halteposition (HP) im Kupplungsteil (2) befindet, wobei auf einer der Einsteckrichtung (SR) des Steckerteils (S) zugewandten Seite der Rastarme (15a, 15b) sich jeweils Schrägflächen (21a, 21b) befinden, die zum Zusammenwirken mit dem Bund (S2) des Steckerteiles (S) entgegen der Einführrichtung (SR) des Steckerteiles (S) divergieren, wobei die Schrägflächen (21a, 21b) jeweils aus mindestens zwei Teilflächen (T1, T2) mit unterschiedlichen Divergenzwinkeln (µ1, µ2) entgegen der Einführrichtung (SR) des Steckerteiles (S) gebildet sind, wobei die Schenkel der Divergenzwinkel (µ1, µ2) einerseits jeweils durch die Längsachse (X-X) des Steckverbinders (1) und anderseits jeweils durch eine durch die jeweilige Flächenmitte verlaufende, der Neigung der Teilfläche (T1, T2) folgende Gerade (G1, G2) gebildet sind, wobei jeweils eine erste Teilfläche (T1), die sich in der Nähe des freien Endes des jeweiligen Rastarmes (15a, 15b) befindet, einen kleineren Divergenzwinkel (µ1) aufweist, als es jeweils der Divergenzwinkel (µ2) einer zweiten Teilfläche (T2) ist, die sich jeweils in einem mittleren Bereich des Rastarmes (15a, 15b) befindet.

2. Steckverbinder (1) nach Anspruch 1,
**dadurch gekennzeichnet, dass** die Differenz (µ2-µ1) zwischen den Divergenzwinkeln (µ2, µ1) im Bereich von 10° bis 20° liegt.

3. Steckverbinder (1) nach Anspruch 1 oder 2,
**dadurch gekennzeichnet, dass** die Vormontage-Stellung und die Montage-Stellung der Halteklammer (3) koaxial zueinander und zur Achse (X-X) des Kupplungsteiles (2) ausgerichtet sind, wobei der Halteklammer (3) in der Vormontage-Stellung vorzugsweise ein Spiel für eine radiale Bewegung aufweist.

4. Steckverbinder (1) nach einem der Ansprüche 1 bis 3,
**dadurch gekennzeichnet, dass** die Halteklammer (3) einstückig, insbesondere als ein aus Kunststoff bestehendes Spritzguss-Formteil, ausgebildet ist.

5. Steckverbinder (1) nach einem der Ansprüche 1 bis 4,
**dadurch gekennzeichnet, dass** in der - in Richtung der Längsachse (X-X) gesehen - von der Grundgestalt her U-förmig ausgebildeten Halteklammer (3) durch den Verbindungsbereich (19) der Schenkel des U auf der den freien Enden der Federarme (15a, 15b, 16a, 16b) abgewandten Seite eine Betätigungsfläche (20) für die Halteklammer (3) ausgebildet ist.

6. Steckverbinder (1) nach einem der Ansprüche 1 bis 5,
**dadurch gekennzeichnet, dass** jeweils an den Federarmen (15a, 15b) des Paares (15a/15b) von Federarmen (15a, 15b), das in der Einführposition (EP) und in der Halteposition (HP) der Halteklammer (3) einer der Einführrichtung (SR) des Steckerteils (S) zugewandten Stirnwand (29) des Kupplungsteils (2) zugewandt ist, sich, insbesondere in einem mittigen Bereich der Federarme (15a, 15b), Führungszapfen (23a, 23b) zum Eingriff in komplementäre Führungsschlitze (24a, 24b) des Kupplungsteils (2) befinden.

7. Steckverbinder (1) nach einem der Ansprüche 1 bis 6,
**dadurch gekennzeichnet, dass** sich jeweils an den Federarmen (15a, 15b) eines Paares (15a/15b) von Federarmen (15a, 15b), das in der Einführposition (EP) und in der Halteposition (HP) der Halteklammer (3) einer der Einführrichtung (SR) des Steckerteils (S) zugewandten Stirnwand (29) des Kupplungsteils (2) zugewandt ist, sekantenartig zum Kupplungsteil (2) gerichtete Längsführungsstege (25a, 25b) oder Längsführungsstufen zum Zusammenwirken mit komplementären Führungen (26a, 26b) des Kupplungsteils (2) befinden.

8. Steckverbinder (1) nach Anspruch 7,
**dadurch gekennzeichnet, dass** die sekantenartig zum Kupplungsteil (2) gerichteten Längsführungsstege (25a, 25b) oder Längsführungsstufen beidseitig eines/des Verbindungsbereiches (19) oder in einem/dem Verbindungsbereich (19), in dem die Federarme (15a, 15b, 16a, 16b) miteinander verbunden sind, angeordnet sind.

9. Steckverbinder (1) nach Anspruch 7 oder 8,
**dadurch gekennzeichnet, dass** die sekantenartig zum Kupplungsteil (2) gerichteten Längsführungsstege oder Längsführungsstufen an radial nach innen gerichteten Vorsprüngen (39a, 39b) der Federarme (15a, 15b) angeordnet sind.

10. Steckverbinder (1) nach einem der Ansprüche 1 bis 9,
**dadurch gekennzeichnet, dass** zur Verriegelung der Halteklammer (3) jeweils an den Federarmen (16a, 16b) des Paares (16a/16b) von Federarmen (16a, 16b), das in der Einführposition und in der Halteposition der Halteklammer (3) einer der Einführrichtung (SR) des Steckerteils (S) zugewandten Stirnwand (29) des Kupplungsteils (2) abgewandt ist, sich an den freien Enden der Federarme (16a, 16b) jeweils Nocken (27a, 27b) mit nach innen, gegeneinander, gerichteten Spitzen befinden.

11. Steckverbinder (1) nach einem der Ansprüche 1 bis 10,
**dadurch gekennzeichnet, dass** das Kupplungsteil (2) einen, insbesondere als Muffenteil ausgebildeten, Grundkörper (4) und einen, insbesondere von der Grundgestalt her ringförmigen, Aufnahmekörper (5) für die Halteklammer (3) umfasst, die, vorzugsweise über eine stoffschlüssige Verbindung, wie durch eine Laserschweißung, miteinander verbindbar bzw. im Montagezustand miteinander verbunden sind, wobei insbesondere der Grundkörper (4) und/oder der Aufnahmekörper (5) als aus Kunststoff bestehende Spritzguss-Formteile ausgeführt sind.

12. Steckverbinder (1) nach einem der Ansprüche 1 bis 11,
**dadurch gekennzeichnet, dass** das Kupplungsteil (2), insbesondere durch seinen Aufnahmekörper (5) für die Halteklammer (2), ein von der Grundgestalt her hohlzylindrisches, an den jeweiligen Stirnwänden (29, 30) des Hohlzylinders jeweils geschlossenes Gehäuse für die Halteklammer (3) bildet, welches auf zwei einander diametral gegenüber liegenden Seiten umfangsgemäße Öffnungen (31, 32) zum Durchgriff der Halteklammer (3), insbesondere eine Einführöffnung (31) und eine Austrittsöffnung (32), aufweist.

13. Steckverbinder (1) nach einem der Ansprüche 1 bis 12,
**dadurch gekennzeichnet, dass** sich in dem Kupplungsteil (2), insbesondere in dessen Aufnahmekörper (5) für die Halteklammer (3), auf einer/der der Einführrichtung (SR) des Steckerteils (S) zugewandten Stirnwand (29) des Kupplungsteils (2) Führungsschlitze (24a, 24b) zum Eingriff von an Federarmen (15a, 15b) der Halteklammer (3) befindlichen komplementären Führungszapfen (23a, 23b) befinden.

14. Steckverbinder (1) nach Anspruch 13,
**dadurch gekennzeichnet, dass** in den Führungsschlitzen (24a, 24b) jeweils eine Steuerkontur ausgebildet ist, durch die im Zusammenwirken mit den komplementären Führungszapfen (23a, 23b) einerseits eine Einführbewegung und eine Ausschubbewegung der Halteklammer (3) quer zur Steckrichtung (SR) des Steckerteils (S) begrenzt wird, und andererseits bei einer Bewegung der Halteklammer (3) quer zur Steckrichtung (SR) des Steckerteils (S) eine radiale Auswärtsbewegung oder eine radiale Einwärtsbewegung der Federarme (15a, 15b) bewirkt wird, an denen sich die Führungszapfen (23a, 23b) befinden.

15. Steckverbinder (1) nach Anspruch 13 oder 14,
**dadurch gekennzeichnet, dass** sich jeweils in einem radial nach außen führenden, eine Öffnungsbewegung der Halteklammer (3) steuernden Abschnitt der Führungsschlitze (24a, 24b) ein Knickpunkt (K3) befindet, der im Zusammenwirken mit den Führungszapfen (23a, 23b) einen Anstieg der auf eine Betätigungsfläche (20) wirkenden Kraft bewirkt, die für das Öffnen der Halteklammer (3) aufzuwenden ist, und vorzugsweise zusätzlich ein akustisches Signal bewirkt.

16. Steckverbinder (1) nach einem der Ansprüche 1 bis 15,
**dadurch gekennzeichnet, dass** sich in dem Kupplungsteil (2), insbesondere in dessen Aufnahmekörper (5) für die Halteklammer (3), bevorzugt innenseitig an einer/der der Einführrichtung (SR) des Steckerteiles (S) zugewandten Stirnwand (29) des Kupplungsteils (2), Führungen (26a, 26b) für an Federarmen (15a, 15b) der Halteklammer (3) befindliche komplementäre Führungsstege (25a, 25b) oder -stufen befinden.

17. Steckverbinder (1) nach einem der Ansprüche 1 bis 16,
**dadurch gekennzeichnet, dass** sich in dem Kupplungsteil (2), insbesondere mittig im Bereich der Austrittsöffnung (32) des Aufnahmekörpers (5) des Kupplungsteils (2), ein Blockierelement (33) mit jeweils einer Gegenkontur (34a, 34b) für das Zusammenwirken mit an Federarmen (16a, 16b) endseitig angeordneten Nocken (27a, 27b) befindet, wobei die Nocken (27a, 27b) und das Blockierelement (33) mit den Gegenkonturen (34a, 34b) eine kraft- und formschlüssige Verbindung zwischen der Halteklammer (2) und dem Kupplungsteil (3) ausbilden.

18. Steckverbinder (1) nach einem der Ansprüche 1 bis 17,
**dadurch gekennzeichnet, dass** sich jeweils an den Federarmen (15a, 15b) eines Paares (15a/15b) von Federarmen (15a, 15b), das in der Einführposition (EP) und in der Halteposition (HP) der Halteklammer (3) einer der Einführrichtung (SR) des Steckerteils (S) zugewandten Stirnwand (29) des Kupplungsteils (2) zugewandt ist, insbesondere an deren freien Enden, in axialer Richtung (X-X) entgegen der Steckrichtung (SR) vorstehende angefaste Erhebungen (37) befinden, wobei in der Halteklammer (2) jeweils als Vertiefung eine komplementäre Gegenkontur (38) ausgebildet ist.

## Claims

1. A plug-type connector (1) for hose and/or pipe connections, including
- a coupling part (2) having a receiving opening (10) into which a plug part (S) with a plug shaft (S1), which comprises a collar (S2), is insertable in a plug-in direction (SR), and
- a radially slotted (17) retaining clip (3), which is resiliently elastic at least in regions, comprises at least two latching arms (15a, 15b), is pre-assemblable on the coupling part (2) and in a pre-assembly position assumes an insertion position (EP) for the plug part (S) in which the plug part (S) is insertable through the retaining clip (3) into the receiving opening (10), and wherein the retaining clip (3) in an assembly position assumes a retaining position (HP) for the inserted plug part (S), in which the plug part (S) with its collar (S2) is blockable in the receiving opening (10) in a positive locking manner by means of the retaining clip (3) against being pulled out,
whereby the basic shape of the retaining clip (3) - when viewed in the direction of the longitudinal axis (X-X) - is realized in a U-shaped manner, wherein the legs of the U realize two pairs (15a/15b, 16a/16b) of latching arms (15a, 15b, 16a, 16b) which are located diametrically opposite one another and are arranged one behind the other in the axial direction (X-X), are each separated from one another by a slot (18) and are resiliently elastic in both the radial and the axial (X-X) direction, wherein the first pair (15a/15b) of latching arms (15a, 15b) blocks the plug part (S) in the retaining position (HP) in a positive locking manner against being pulled out and the second pair (16a/16b) of latching arms (16a, 16b) holds the retaining clip (3) in a captive manner in the coupling part (2) both in the pre-assembly position and in the assembly position
**characterized in that** the first pair (15a/15b) of latching arms (15a, 15b) is located on a side of the retaining clip (3) that faces the plug-in direction (SR) of the plug part (S) when the retaining clip (3) is situated in the insertion position (EP) and in the retaining position (HP) in the coupling part (2), wherein inclined surfaces (21a, 21b), which diverge in opposition to the plug-in direction (SR) of the plug part (S) for interaction with the collar (S2) of the plug part (S), are situated in each case on a side of the latching arms (15a, 15b) which faces the plug-in direction (SR) of the plug part (S), whereby the inclined surfaces (21a, 21b) are each formed from at least two part-surfaces (T1, T2) at various divergence angles (µ1, µ2) in opposition to the plug-in direction (SR) of the plug part (S), whereby the legs of the divergence angles (µ1, µ2) are formed on the one hand in each case by the longitudinal axis (X-X) of the plug-type connector (1) and, on the other hand, in each case by a straight line (G1, G2) through the respective center following the inclination of the surface (T1, T2), whereby
in each case a first part-surface (T1), which is situated in the vicinity of the free end of the respective latching arm (15a, 15b), comprises a divergence angle (µ1) that is smaller in each case than the divergence angle (µ2) of a second part-surface (T2) which is situated in each case in a central region of the latching arm (15a, 15b).

2. The plug-type connector (1) as claimed in claim 1,
**characterized in that** the difference (µ2-µ1) between the divergence angles (µ2, µ1) is within the range of between 10° and 20°.

3. The plug-type connector (1) as claimed in claim 1 or 2,
**characterized in that** the pre-assembly position and the assembly position of the retaining clip (3) are aligned coaxially with respect to one another and to the axis (X-X) of the coupling part (2), wherein the retaining clip (3) in the pre-assembly position preferably comprises a clearance for a radial movement.

4. The plug-type connector (1) as claimed in one of claims 1 to 3,
**characterized in that** the retaining clip (3) is realized in one piece, in particular as an injection molded part produced from plastics material.

5. The plug-type connector (1) as claimed in one of claims 1 to 4,
**characterized in that** an actuating surface (20) for the retaining clip (3) is realized in the retaining clip (3) which is realized in its basic shape in a U-shaped manner - when viewed in the direction of the longitudinal axis (X-X) - by means of the connecting region (19) of the legs of the U on the side that faces away from the free ends of the spring arms (15a, 15b, 16a, 16b).

6. The plug-type connector (1) as claimed in one of claims 1 to 5,
**characterized in that** guide pins (23a, 23b) for engagement in complementary guide slots (24a, 24b) of the coupling part (2) are situated on each of the spring arms (15a, 15b) of the pair (15a/15b) of spring arms (15a, 15b), which, in the insertion position (EP) and in the retaining position (HP) of the retaining clip (3), faces an end wall (29) of the coupling part (2), which faces the plug-in direction (SR) of the plug part (S), in particular in a central region of the spring arms (15a, 15b).

7. The plug-type connector (1) as claimed in one of claims 1 to 6,
**characterized in that** longitudinal guide webs (25a, 25b) or longitudinal guide steps, which are directed in a secant-like manner to the coupling part (2), for interaction with complementary guides (26a, 26b) of the coupling part (2), are situated on each of the spring arms (15a, 15b) of a pair (15a/15b) of spring arms (15a, 15b), which, in the insertion position (EP) and in the retaining position (HP) of the retaining clip (3), faces an end wall (29) of the coupling part (2), which faces the plug-in direction (SR) of the plug part (S).

8. The plug-type connector (1) as claimed in claim 7,
**characterized in that** the longitudinal guide webs (25a, 25b) or longitudinal guide steps, which are directed in a secant-like manner to the coupling part (2), are arranged on both sides of a/the connecting region (19) or in a/the connecting region (19) in which the spring arms (15a, 15b, 16a, 16b) are connected together.

9. The plug-type connector (1) as claimed in claim 7 or 8,
**characterized in that** the longitudinal guide webs or longitudinal guide steps, which are directed in a secant-like manner to the coupling part (2), are arranged on radially inwardly directed projections (39a, 39b) of the spring arms (15a, 15b).

10. The plug-type connector (1) as claimed in one of claims 1 to 9,
**characterized in that** for locking the retaining clip (3), cams (27a, 27b) with tips which are directed inwardly toward one another are situated in each case on the spring arms (16a, 16b) of the pair (16a/16b) of spring arms (16a, 16b), which, in the insertion position and in the retaining position of the retaining clip (3), faces away from an end wall (29) of the coupling part (2), which faces the plug-in direction (SR) of the plug part (S).

11. The plug-type connector (1) as claimed in one of claims 1 to 10,
**characterized in that** the coupling part (2) includes a basic body (4), which is realized, in particular, as a sleeve part, and a receiving body (5) for the retaining clip (3), the basic shape of which, in particular, is a ring, which basic body and receiving body are connectable together, preferably via a substance-to-substance bond, such as by laser welding, or are connected together in the assembled state, wherein, in particular, the basic body (4) and/or the receiving body (5) are realized as injection molded parts consisting of plastics material.

12. The plug-type connector (1) as claimed in one of claims 1 to 11,
**characterized in that** the coupling part (2), in particular by means of its receiving body (5) for the retaining clip (2), forms a housing for the retaining clip (3) which is hollow cylindrical in its basic shape, is closed in each case at the respective end walls (29, 30) of the hollow cylinder and, on two sides which are located diametrically opposite one another, comprises peripheral openings (31, 32) for the through-passage of the retaining clip (3), in particular an insertion opening (31) and an outlet opening (32).

13. The plug-type connector (1) as claimed in one of claims 1 to 12,
**characterized in that** guide slots (24a, 24b) for the engagement of complementary guide pins (23a, 23b), which are located on spring arms (15a, 15b) of the retaining clip (3), are situated in the coupling part (2), in particular in the receiving body (5) thereof for the retaining clip (3), on a/the end wall (29) of the coupling part (2) which faces the plug-in direction (SR) of the plug part (S).

14. The plug-type connector (1) as claimed in claim 13,
**characterized in that** a control contour is realized in each of the guide slots (24a, 24b), by means of which control contour, in cooperation with the complementary guide pins (23a, 23b), on the one hand an insertion movement and an extension movement of the retaining clip (3) transversely to the plug-in direction (SR) of the plug part (S) is delimited, and on the other hand when the retaining clip (3) is moved transversely to the plug-in direction (SR) of the plug part (S), the spring arms (15a, 15b), on which the guide pins (23a, 23b) are situated, are caused to move radially outward or radially inward.

15. The plug-type connector (1) as claimed in claim 13 or 14,
**characterized in that** a bend point (K3), which in cooperation with the guide pins (23a, 23b) brings about an increase in the force acting on an actuating surface (20) which is to be expended for the opening of the retaining clip (3), and preferably additionally brings about an acoustic signal, is situated in each case in a portion of the guide slots (24a, 24b) which leads radially outward and controls an opening movement of the retaining clip (3).

16. The plug-type connector (1) as claimed in one of claims 1 to 15,
**characterized in that** guides (26a, 26b) for complementary guide webs (25a, 25b) or guide steps, which are located on spring arms (15a, 15b) of the retaining clip (3), are situated in the coupling part (2), in particular in the receiving body (5) thereof for the retaining clip (3), in a preferred manner on the inside of a/the end wall (29) of the coupling part (2) which faces the plug-in direction (SR) of the plug part (S).

17. The plug-type connector (1) as claimed in one of claims 1 to 16,
**characterized in that** a blocking element (33) in each case with a counter contour (34a, 34b) for interaction with cams (27a, 27b) which are arranged at the end of spring arms (16a, 16b), is situated in the coupling part (2), in particular in the middle of the region of the outlet opening (32) of the receiving body (5) of the coupling part (2), wherein the cams (27a, 27b) and the blocking element (33) with the counter contours (34a, 34b) realize a positive locking and non-positive locking connection between the retaining clip (3) and the coupling part (2).

18. The plug-type connector (1) as claimed in one of claims 1 to 17,
**characterized in that** chamfered elevations (37) which protrude in the axial direction (X-X) in opposition to the plug-in direction (SR) are situated on each of the spring arms (15a, 15b) of a pair (15a/15b) of spring arms (15a, 15b), which, in the insertion position (EP) and in the retaining position (HP) of the retaining clip (3), faces an end wall (29) of the coupling part (2), which faces the plug-in direction (SR) of the plug part (S), in particular on the free ends thereof, wherein a complementary counter contour (38) is realized in the retaining clip (3) in each case as an indentation.

## Revendications

1. Connecteur enfichable (1) pour raccords de tuyaux et/ou de tubes, comportant
- une partie d'accouplement (2) dotée d'une ouverture de réception (10) dans laquelle une partie enfichable (S) dotée d'une tige enfichable (S1) comprenant un collet (S2) peut être enfichée dans un sens d'enfichage (SR), et
- une pince de retenue (3) fendue radialement (17), élastique au moins dans certaines régions et comprenant au moins deux bras d'encliquetage (15a, 15b), laquelle pince peut être prémontée sur la partie d'accouplement (2) et adopte, dans une position de prémontage, une position d'insertion (EP) pour la partie enfichable (S), position d'insertion dans laquelle la partie enfichable (S) peut être insérée dans l'ouverture de réception (10) à travers la pince de retenue (3), et dans lequel la pince de retenue (3) adopte, dans une position de montage, une position de retenue (HP) pour la partie enfichable enfichée (S), position de retenue dans laquelle la partie enfichable (S) peut être bloquée par complémentarité de forme, par son collet (S2), dans l'ouverture de réception (10) au moyen de la pince de retenue (3) de manière à empêcher un retrait,
dans lequel la pince de retenue (3) est réalisée en forme de U dans sa forme de base, vue dans la direction de l'axe longitudinal (X-X), dans lequel les branches du U forment deux paires (15a/15b, 16a/16b) de bras d'encliquetage (15a, 15b, 16a, 16b) diamétralement opposés, qui sont disposés l'un derrière l'autre dans la direction axiale (X-X), séparés respectivement l'un de l'autre par une fente (18) et élastiques dans la direction radiale et dans la direction axiale (X-X), dans lequel la première paire (15a/15b) de bras d'encliquetage (15a, 15b) bloque la partie enfichable (S) par complémentarité de forme dans la position de retenue (HP) de manière à empêcher un retrait et la deuxième paire (16a/16b) de bras d'encliquetage (16a, 16b) retient la pince de retenue (3) de manière imperdable dans la partie d'accouplement (2) à la fois dans la position de prémontage et dans la position de montage,
**caractérisé en ce que** la première paire (15a/15b) de bras d'encliquetage (15a, 15b) se situe sur un côté de la pince de retenue (3) tourné dans le sens d'enfichage (SR) de la partie enfichable (S), lorsque la pince de retenue (3) se trouve dans la position d'insertion (EP) et dans la position de retenue (HP) dans la partie d'accouplement (2), des surfaces obliques (21a, 21b) se trouvant respectivement sur un côté des bras d'encliquetage (15a, 15b) tourné dans le sens d'enfichage (SR) de la partie enfichable (S), lesquelles surfaces obliques divergent en sens inverse au sens d'insertion (SR) de la partie enfichable (S) pour coopérer avec le collet (S2) de la partie enfichable (S), les surfaces obliques (21a, 21b) étant formées respectivement à partir d'au moins deux surfaces partielles (T1, T2) d'angles de divergence différents (µ1, µ2) en sens inverse au sens d'insertion (SR) de la partie enfichable (S), les branches des angles de divergence (µ1, µ2) étant formées d'une part respectivement par l'axe longitudinal (X-X) du connecteur enfichable (1) et d'autre part respectivement par une droite (G1, G2) passant par le centre de surface respectif et suivant l'inclinaison de la surface partielle (T1, T2), une première surface partielle (T1) qui se trouve à proximité de l'extrémité libre du bras d'encliquetage respectif (15a, 15b) présentant respectivement un angle de divergence (µ1) plus petit que ne l'est respectivement l'angle de divergence (µ2) d'une deuxième surface partielle (T2) qui se trouve respectivement dans une région centrale du bras d'encliquetage (15a, 15b).

2. Connecteur enfichable (1) selon la revendication 1, **caractérisé en ce que** la différence (µ2-µ1) entre les angles de divergence (µ2, µ1) se situe dans la plage de 10° à 20°.

3. Connecteur enfichable (1) selon la revendication 1 ou 2,
**caractérisé en ce que** la position de prémontage et la position de montage de la pince de retenue (3) sont orientées de manière coaxiale l'une par rapport à l'autre et par rapport à l'axe (X-X) de la partie d'accouplement (2), la pince de retenue (3) présentant, dans la position de prémontage, de préférence un jeu pour un déplacement radial.

4. Connecteur enfichable (1) selon l'une des revendications 1 à 3,
**caractérisé en ce que** la pince de retenue (3) est réalisée d'une seule pièce, en particulier en tant que pièce moulée par injection constituée de matière synthétique.

5. Connecteur enfichable (1) selon l'une des revendications 1 à 4,
**caractérisé en ce qu'**une surface d'actionnement (20) pour la pince de retenue (3) est réalisée dans la pince de retenue (3) réalisée en forme de U dans sa forme de base, vue dans la direction de l'axe longitudinal (X-X), à travers la région de liaison (19) des branches du U sur le côté opposé aux extrémités libres des bras élastiques (15a, 15b, 16a, 16b).

6. Connecteur enfichable (1) selon l'une des revendications 1 à 5,
**caractérisé en ce qu'**en particulier dans une région centrale des bras élastiques (15a, 15b), des goupilles de guidage (23a, 23b) destinées à venir en prise dans des fentes de guidage complémentaires (24a, 24b) de la partie d'accouplement (2) se trouvent respectivement sur les bras élastiques (15a, 15b) de la paire (15a/15b) de bras élastiques (15a, 15b) qui est tournée vers une paroi frontale (29) de la partie d'accouplement (2) tournée dans le sens d'insertion (SR) de la partie enfichable (S) dans la position d'insertion (EP) et dans la position de retenue (HP) de la pince de retenue (3).

7. Connecteur enfichable (1) selon l'une des revendications 1 à 6,
**caractérisé en ce que** des nervures de guidage longitudinales (25a, 25b) ou des gradins de guidage longitudinaux orientés de manière sécante par rapport à la partie d'accouplement (2) et destinés à coopérer avec des guides complémentaires (26a, 26b) de la partie d'accouplement (2) se trouvent respectivement sur les bras élastiques (15a, 15b) d'une paire (15a/15b) de bras élastiques (15a, 15b) qui est tournée vers une paroi frontale (29) de la partie d'accouplement (2) tournée dans le sens d'insertion (SR) de la partie enfichable (S) dans la position d'insertion (EP) et dans la position de retenue (HP) de la pince de retenue (3).

8. Connecteur enfichable (1) selon la revendication 7,
**caractérisé en ce que** les nervures de guidage longitudinales (25a, 25b) ou gradins de guidage longitudinaux orientés de manière sécante par rapport à la partie d'accouplement (2) sont disposés de part et d'autre d'une/de la région de liaison (19) ou dans une/la région de liaison (19) dans laquelle les bras élastiques (15a, 15b, 16a, 16b) sont reliés l'un à l'autre.

9. Connecteur enfichable (1) selon la revendication 7 ou 8,
**caractérisé en ce que** les nervures de guidage longitudinales ou gradins de guidage longitudinaux orientés de manière sécante par rapport à la partie d'accouplement (2) sont disposés sur des saillies (39a, 39b), orientées radialement vers l'intérieur, des bras élastiques (15a, 15b).

10. Connecteur enfichable (1) selon l'une des revendications 1 à 9,
**caractérisé en ce que**, pour le verrouillage de la pince de retenue (3), des cames (27a, 27b) dotées de pointes orientées vers l'intérieur l'une vers l'autre se trouvent, respectivement aux extrémités libres des bras élastiques (16a, 16b), respectivement sur les bras élastiques (16a, 16b) de la paire (16a/16b) de bras élastiques (16a, 16b) qui, dans la position d'insertion et dans la position de retenue de la pince de retenue (3), est opposée à une paroi frontale (29) de la partie d'accouplement (2) tournée dans le sens d'insertion (SR) de la partie enfichable (S).

11. Connecteur enfichable (1) selon l'une des revendications 1 à 10,
**caractérisé en ce que** la partie d'accouplement (2) comporte un corps de base (4) réalisé en particulier comme une partie de manchon et un corps de réception (5), en particulier annulaire dans sa forme de base, pour la pince de retenue (3), lesquels corps peuvent être reliés l'un à l'autre ou sont reliés l'un à l'autre dans l'état de montage de préférence par le biais d'une liaison de matière, telle qu'un soudage au laser, le corps de base (4) et/ou le corps de réception (5) étant en particulier réalisés en tant que pièces moulées par injection constituées de matière synthétique.

12. Connecteur enfichable (1) selon l'une des revendications 1 à 11,
**caractérisé en ce que** la partie d'accouplement (2) forme, en particulier par son corps de réception (5) pour la pince de retenue (2), un logement pour la pince de retenue (3) qui est cylindrique creux dans sa forme de base et respectivement fermé au niveau des parois frontales respectives (29, 30) du cylindre creux, lequel logement comprend, sur deux côtés diamétralement opposés, des ouvertures périphériques (31, 32) pour l'entrée en prise de la pince de retenue (3) à travers celles-ci, en particulier une ouverture d'insertion (31) et une ouverture de sortie (32).

13. Connecteur enfichable (1) selon l'une des revendications 1 à 12,
**caractérisé en ce que** des fentes de guidage (24a, 24b) pour l'entrée en prise de goupilles de guidage complémentaires (23a, 23b) se trouvant sur des bras élastiques (15a, 15b) de la pince de retenue (3) se trouvent dans la partie d'accouplement (2), en particulier dans son corps de réception (5) pour la pince de retenue (3), sur une/la paroi frontale (29) de la partie d'accouplement (2) tournée dans le sens d'insertion (SR) de la partie enfichable (S).

14. Connecteur enfichable (1) selon la revendication 13, **caractérisé en ce qu'**un contour de commande est réalisé respectivement dans les fentes de guidage (24a, 24b), contour au moyen duquel, en coopération avec les goupilles de guidage complémentaires (23a, 23b), d'une part un déplacement d'insertion et un déplacement d'éjection de la pince de retenue (3) transversalement au sens d'enfichage (SR) de la partie enfichable (S) sont limités, et d'autre part, en cas de déplacement de la pince de retenue (3) transversalement au sens d'enfichage (SR) de la partie enfichable (S), un déplacement radial vers l'extérieur ou un déplacement radial vers l'intérieur des bras élastiques (15a, 15b) sur lesquels les goupilles de guidage (23a, 23b) se trouvent est produit.

15. Connecteur enfichable (1) selon la revendication 13 ou 14,
**caractérisé en ce qu'**un point de pliage (K3) se trouve respectivement dans une section de la fente de guidage (24a, 24b) qui mène radialement vers l'extérieur et qui commande un déplacement d'ouverture de la pince de retenue (3), lequel point de pliage (K3), en coopération avec les goupilles de guidage (23a, 23b), produit une augmentation de la force agissant sur une surface d'actionnement (20), laquelle force doit être exercée pour l'ouverture de la pince de retenue (3), et produit de préférence en plus un signal acoustique.

16. Connecteur enfichable (1) selon l'une des revendications 1 à 15,
**caractérisé en ce que** des guides (26a, 26b) pour des nervures (25a, 25b) ou gradins de guidage complémentaires se trouvant sur des bras élastiques (15a, 15b) de la pince de retenue (3) se trouvent dans la partie d'accouplement (2), en particulier dans son corps de réception (5) pour la pince de retenue (3), de préférence du côté intérieur sur une/la paroi frontale (29) de la partie d'accouplement (2) tournée dans le sens d'insertion (SR) de la partie enfichable (S).

17. Connecteur enfichable (1) selon l'une des revendications 1 à 16,
**caractérisé en ce qu'**un élément de blocage (33) comprenant respectivement un contour conjugué (34a, 34b) pour la coopération avec des cames (27a, 27b) disposées du côté des extrémités sur des bras élastiques (16a, 16b) se trouve dans la partie d'accouplement (2), en particulier centralement dans la région de l'ouverture de sortie (32) du corps de réception (5) de la partie d'accouplement (2), les cames (27a, 27b) et l'élément de blocage (33) réalisant avec les contours conjugués (34a, 34b) une liaison à force et par complémentarité de forme entre la pince de retenue (2) et la partie d'accouplement (3) .

18. Connecteur enfichable (1) selon l'une des revendications 1 à 17,
**caractérisé en ce que** des rehaussements (37) biseautés faisant saillie dans la direction axiale (X-X) en sens inverse au sens d'enfichage (SR) se trouvent respectivement sur les bras élastiques (15a, 15b) d'une paire (15a/15b) de bras élastique (15a, 15b) qui est tournée vers une paroi frontale (29) de la partie d'accouplement (2) tournée dans le sens d'insertion (SR) de la partie enfichable (S) dans la position d'insertion (EP) et dans la position de retenue (HP) de la pince de retenue (3), en particulier à leurs extrémités libres, un contour conjugué complémentaire (38) étant respectivement réalisé en tant qu'évidement dans la pince de retenue (2).
